Europäisches Patentamt

European Patent Office

Office européen des brevets

(11) Publication number: **0 464 712 A2**

## EUROPEAN PATENT APPLICATION

(21) Application number: **91110761.3**

(22) Date of filing: **28.06.91**

(51) Int. Cl.⁵: **G06F 3/033**

(30) Priority: **28.06.90 JP 168406/90**
**28.11.90 JP 328459/90**

(43) Date of publication of application:
**08.01.92 Bulletin 92/02**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Ito, Takafumi, c/o Intellectual Pty. Div.**
**K.K. Toshiba, 1-1 Shibaura 1-chome**
**Minato-ku, Tokyo(JP)**
Inventor: **Sakamoto, Hiroyuki, c/o Intellectual Pty. Div.**
**K.K. Toshiba, 1-1 Shibaura 1-chome**
**Minato-ku, Tokyo(JP)**
Inventor: **Kamiyama, Yutaka, c/o Intellectual Pty. Div.**
**K.K. Toshiba, 1-1 Shibaura 1-chome**
**Minato-ku, Tokyo(JP)**

(74) Representative: **Henkel, Feiler, Hänzel & Partner**
**Möhlstrasse 37**
**W-8000 München 80(DE)**

(54) **Display/input control system for software keyboard in information processing apparatus having integral display/input device.**

(57) A predetermined logic keyboard is displayed in accordance with an attribute set for each input field on a data input screen, and a data input operation is performed. The display position of an input area is determined in accordance with contents displayed on a display unit. If the display position of the input area is inadequate, movement of the input area is designated to change its display position. A display pattern to be displayed is selected from a plurality of types of display patterns in accordance with processing contents. When an input pen is kept ON at the same position for a predetermined period of time, processing with respect to the corresponding input area is continuously performed.

F I G. 15

The present invention relates to a display/input control system of a software keyboard used for an information processing apparatus having an integral display/input device capable of on-line hand-writing input.

As input devices for directly inputting data into an information processing apparatus such as a computer, a keyboard, a mouse, a tablet, and the like have been used. Recently, a great deal of attention has been paid to an integral display/input device as an input device. This integral display/input device is constituted by a display unit such as a flat liquid crystal display (LCD) and a transparent tablet as a coordinate input unit, which are stacked on each other. In the integral display/input device, electrodes are arranged in the transparent tablet in the form of a matrix. With this arrangement, positions designated by a stylus pen can be detected with high precision. The locus of the positions designated by the stylus pen is displayed on the display unit. Therefore, an operator can write characters and the like on the tablet with the stylus pen, as if he/she was writing on a sheet of paper with a pencil, while visually recognizing contents displayed on the display unit. That is, the integral display/input device serves as a man-machine interface which allows anyone to easily perform data input.

In practice, data input to an information processing apparatus having such an integral display/input device is performed in the following manner.

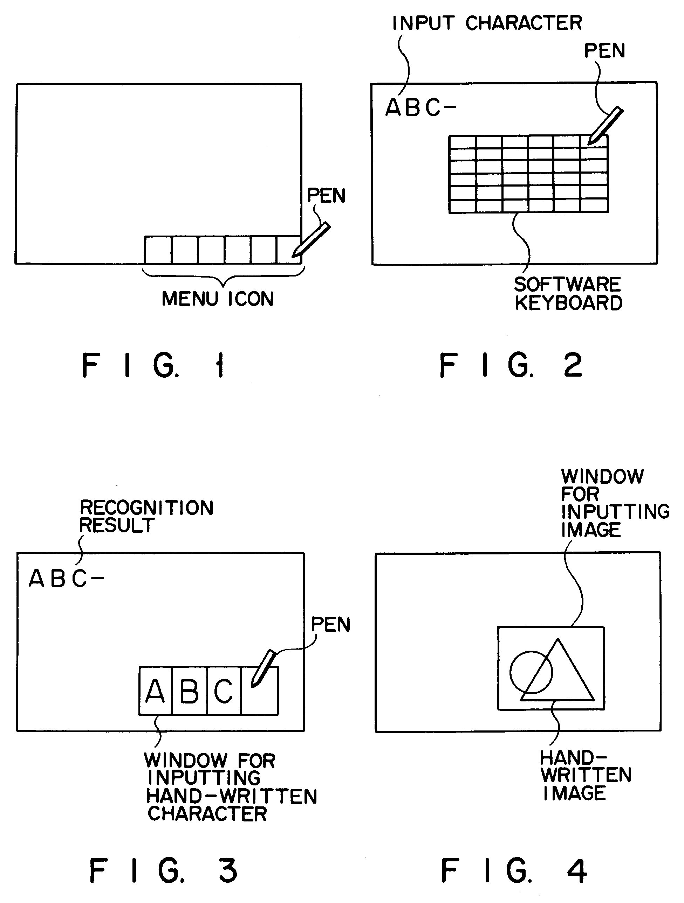

(i) A menu icon, as shown in Fig. 1, which is used to select items indicating processing contents is displayed. A menu item in the menu icon is arbitrarily designated to select the corresponding item.

(ii) As shown in Fig. 2, a keyboard having a plurality of keys (input areas) arranged in a predetermined order is displayed on the display unit (software keyboard). When an arbitrary key of the keyboard is designated, a character (a symbol or the like) of the designated key is input.

(iii) As shown in Fig. 3, a window for inputting hand-written characters is displayed on the screen. When a character is hand-written within this window, character recognition processing is performed with respect to the hand-written pattern by an on-line hand-written character recognition function. With this operation, the character (a symbol or the like) is input.

(iv) As shown in Fig. 4, a window for inputting images is displayed. When an arbitrary pattern is hand-written within the window, the pattern is directly input as an image.

In a conventional apparatus, the input areas of a menu icon, a software keyboard, a hand-written character input window, an image input window, and the like are displayed at predetermined fixed positions on the screen.

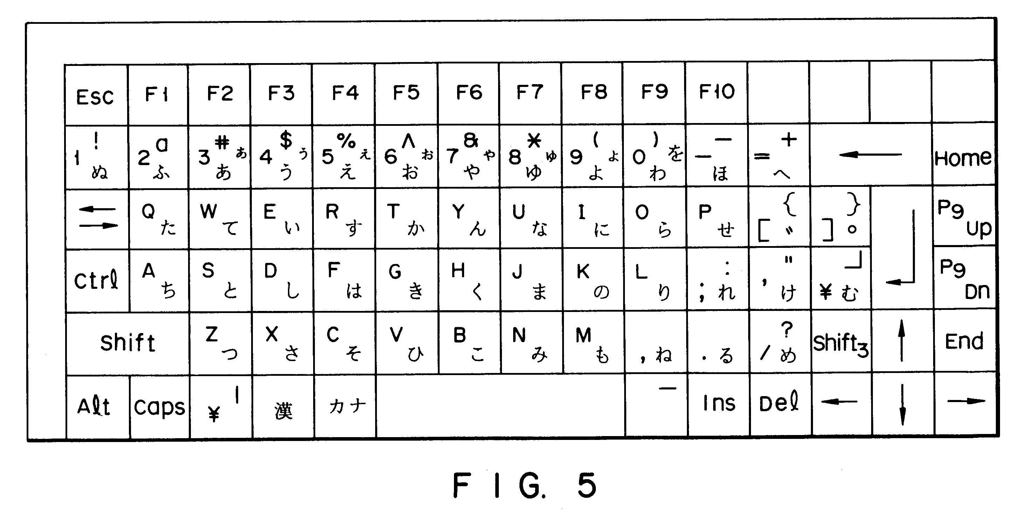

In addition, the software keyboard has the same key pattern as that of a physical keyboard, as shown in Fig. 5. That is, all the characters such as alphanumeric characters, alpha symbols, and kana characters are input by using the software keyboard having one pattern.

A character input operation by means of the software keyboard is performed by position-designating (depressing) a key top in the keyboard pattern with a stylus pen. In this case, the key code of a character corresponding to the designated key is input only when a pen tit switch attached to the tit of the stylus pen is turned on (depressed with a force of a certain strength).

In the method of using a software keyboard, however, since a full keyboard used in a general information processing apparatus is displayed, the number of keys is large. For this reason, it takes much time to select keys.

Furthermore, since an input area such as a menu icon, a software keyboard, a hand-written character input window, or an image input window is always displayed at a fixed position, the following problems are posed.

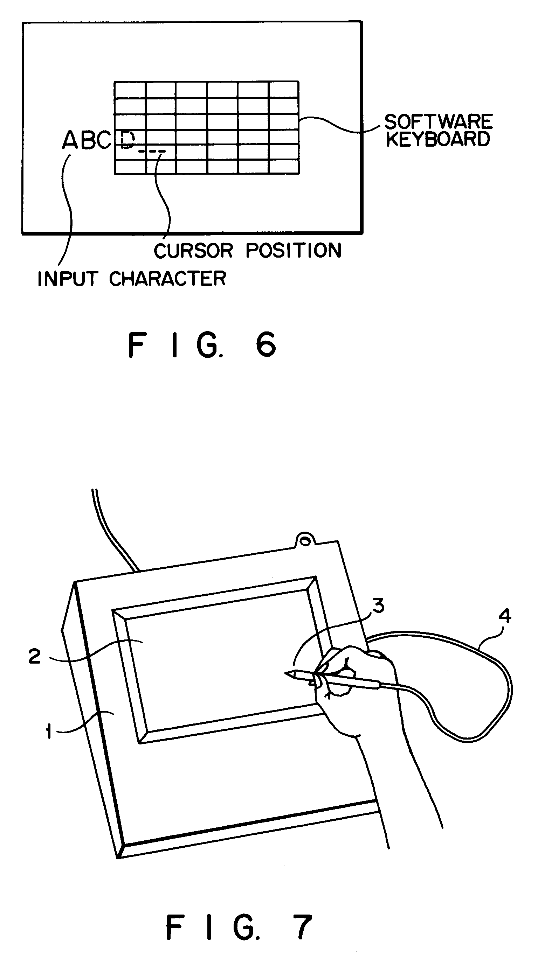

An input area is displayed at a predetermined position on an original display screen. While the input area is displayed, a portion, of the original display screen, corresponding to the input area cannot be seen. Therefore, an operator cannot perform an input operation while referring to the original display screen. For example, as shown in Fig. 6, if the software keyboard is called while input characters are displayed on the original display screen (the next input character position is indicated by a cursor), the software keyboard may overlap the input characters. In such a case, since input characters cannot be recognized, an inconvenience is caused in an input operation, resulting in a considerable deterioration in operability. This applies to cases wherein other input areas such as the hand-written character input window and the image input window are displayed.

In addition, similar to a physical keyboard, in the software keyboard, a plurality of characters are displayed on one key top, as shown in Fig. 5, so that a plurality of characters (symbols and the like) such as alphanumeric characters, alpha symbols, and kana characters can be input by using a shift key and the like together with keys. For this reason, the display of the software keyboard is obscured, and an input error tends to occur. Furthermore, since the software keyboard has only one key arrangement pattern (JIS arrangement), it is difficult for a beginner to use the software keyboard, similar to a physical keyboard.

Therefore, data input cannot be efficiently performed. Moreover, in the data input scheme using the conventional software keyboard, a character or the like is input only when the pen tit switch is turned on. For this reason, even when the same character is to be repeatedly input, ON/OFF operations of the pen tit switch must be repeated by the number of times corresponding to the number of key-input characters, thus posing the problem of poor operability.

The present invention has been made in consideration of the above situation, and has as its object to provide an information processing apparatus which can easily and efficiently input data such as characters through an integral display/input device.

According to the first aspect of the present invention, there is provided a data input system in an information processing apparatus having an integral display/input device formed by integrally stacking a display unit and a coordinate input unit, and position designating means for designating an arbitrary coordinate position on the coordinate input unit, which are used for data input, comprising first display means for causing the display unit to display a data input screen on which at least one input field for displaying contents of input data is set; attribute storage means for storing an attribute of input data corresponding to the input field; logic keyboard storage means for storing information associated with a plurality of logic keyboards corresponding to the types of attributes stored in the attribute storage means, the plurality of logic keyboards being displayed to input data of specific contents; input field discriminating means for discriminating a target input field on a data input screen displayed by the first display means; attribute discriminating means for discriminating an attribute corresponding to the input field discriminated by the input field discriminating means by referring to the attribute storage means; second display means for displaying a logic keyboard corresponding to the attribute discriminated by the attribute discriminating means on the basis of the information stored in the logic keyboard storage means; and means for performing data input by using the logic keyboard displayed by the second display means.

According to the second aspect of the present invention, there is provided an information processing apparatus, comprising an integral display/input apparatus device formed by integrally stacking a display unit and a coordinate input unit; and display means for displaying an input area, indicating a specific area on the coordinate input unit, at an arbitrary position in accordance with contents which are already displayed on the display unit, the input area indicating specific processing contents and designating execution of the specific processing contents.

According to the third aspect of the present invention, there is provided an information processing apparatus comprising an integral display/input apparatus device formed by integrally stacking a display unit and a coordinate input unit; logic keyboard display means for displaying patterns of logic keyboards for inputting data to the information processing apparatus in accordance with information input from the coordinate input unit; and means for changing the display patterns of the logic keyboards in accordance with a shift state of the logic keyboard.

According to the fourth aspect of the present invention, there is provided an information processing apparatus comprising an integral display/input device formed by integrally stacking a display unit and a coordinate input unit; logic keyboard display means for displaying patterns of logic keyboards for inputting data to the information processing apparatus in accordance with information input from the coordinate input unit; and key arrangement changing means for changing a key arrangement of the pattern of the displayed logic keyboard.

According to the fifth aspect of the present invention, there is provided an information processing apparatus, comprising an integral display/input device formed by integrally stacking a display unit and a coordinate input unit; display means for displaying, on the display unit, as needed, an input area indicating a specific area on the coordinate input unit, the input area indicating specific processing contents and designating execution of the specific processing contents; detecting means for detecting that the input area is kept designated for a predetermined period of time; and means for performing specific processing corresponding to the designated input area every time the detecting means detects that the input area is kept designated for the predetermined period of time.

According to the present invention, a predetermined logic keyboard (software keyboard) is displayed in accordance with an attribute (numeric, kana, composite, or the like) set for each input field on a data input screen and is used to perform a data input operation. Since a logic keyboard (constituted by keys required for data input) is selected for each input field, data input can be efficiently performed.

In addition, the display position of an input area is determined in accordance with contents displayed on the display unit. That is, a display operation can be performed such that previously displayed contents are not concealed by a subsequently displayed input area. For example, when a character or the like is to be input, the position of an input area is determined such that the input area and a position (display position) at which the input character is to be displayed do not overlap. If another input area and an area in which an image or the like is to be input are present in advance, the position of an input area is determined in the same manner such that an area where the input area and other areas overlap is minimized (ideally do not overlap). If the current display position of an input area is inadequate, movement of the input area is designated so that its display position can be arbitrarily changed. Therefore, the input area can be set at a position desired by a user.

A display pattern to be displayed is selected from a plurality of types of display patterns (software keyboards) constituted by a plurality of input areas. In addition, a display pattern to be displayed is determined in accordance with processing contents (e.g., hiragana input or kana input).

Furthermore, when an operation to an input area is continuously designated, processing corresponding to the input area, e.g., a character input operation, is performed every time a predetermined period of time elapses. Therefore, since position designation need not be repeated, a simple operation can be realized.

As described above, according to the present invention, since software keyboards can be selectively used in accordance with the types of characters to be input, data input can be performed without causing much difference between individuals, and key selection can be easily performed. Therefore, a reliable, efficient data input operation can be performed.

Since a software keyboard can be easily displayed at a position where an operator can see displayed contents without interference from the software keyboard, the operator can efficiently perform a data input operation while referring to the displayed contents. In addition, since an input area (software keyboard) having an arrangement desired by a user can be selected, an efficient data input operation can be performed. Furthermore, since a repetitive input operation of the same character or the like by means of a software keyboard can be performed by only continuously performing position designation, a very simple input operation can be realized.

This invention can be more fully understood from the following detailed description when taken in conjunction with the accompanying drawings, in which:

Figs. 1 through 6 are views for explaining a data input method in an information processing apparatus having a conventional integral display/input device;

Fig. 7 is a perspective view showing an outer appearance arrangement of an information processing apparatus having an integral display/input device according to the present invention;

Fig. 8 is a plan view showing the information processing apparatus in Fig. 7;

Fig. 9 is a cross-sectional view showing the information processing apparatus in Fig. 2;

Fig. 10 is a sectional view showing an arrangement of a switch incorporated in a stylus pen in Fig. 7;

Fig. 11 is a block diagram showing an arrangement of the information processing apparatus in Fig. 7;

Fig. 12 is a view showing a display screen for inputting data by using a software keyboard according to the present invention;

Fig. 13 is a flow chart showing a procedure of data input processing by means of a software keyboard;

Fig. 14 is a view showing an arrangement of areas for storing screen format data according to the present invention;

Fig. 15 is a flow chart showing a flow of data in a case wherein a software keyboard is displayed;

Fig. 16 is a view showing a data inputting display screen on which a software keyboard constituted by numeric keys is displayed according to the present invention;

Fig. 17 is a view showing a data inputting display screen on which a software key constituted by alphabetic keys is displayed according to the present invention;

Fig. 18 is a view showing a data inputting display screen according to another embodiment of the present invention;

Figs. 19A and 19B are flow charts showing a procedure for displaying and moving software keyboards in the embodiment shown in Fig. 18;

Fig. 20 is a view for explaining movement of the display position of a software keyboard according to another embodiment of the present invention;

Fig. 21 is a view for explaining the types of software keyboards according to another embodiment of present invention;

Fig. 22 is a view for explaining an arrangement of a software keyboard according to another embodiment;

Figs. 23 through 30 are views respectively showing detailed arrangements of software keyboards;

Fig. 31 is a flow chart showing a procedure for setting software keyboards in a key arrangement select process;

Fig. 32 is a view showing a screen for key arrangement selection;

Fig. 33 is a view showing a display screen on which a software keyboard is displayed when a key arrangement is set;

Figs. 34A through 34C are flow charts showing a procedure for key pattern determination; and

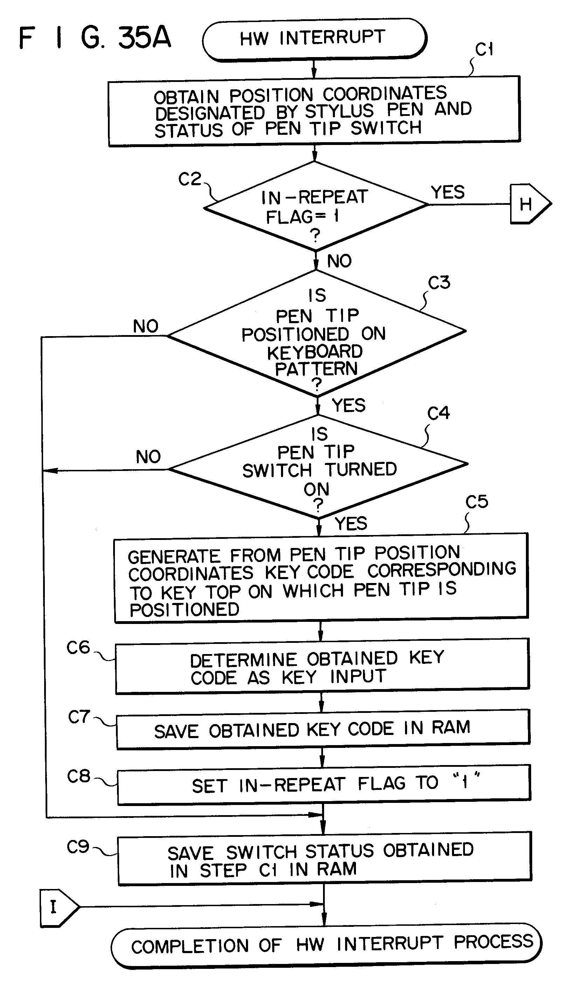

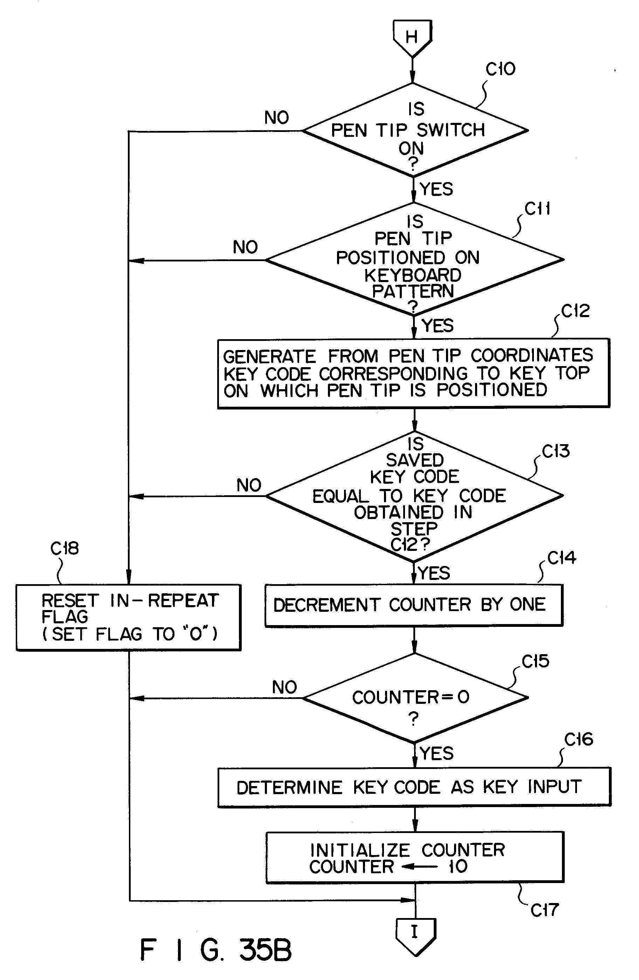

Figs. 35A and 35B are flow charts showing a procedure for a data input scheme using a software keyboard.

Fig. 7 is a perspective view showing an outer appearance arrangement of an information processing apparatus having an integral display/input device according to an embodiment of the present invention. Referring to Fig. 7, an integral display/input device 2 is arranged on the upper surface of an apparatus casing 1. The integral display/input device 2 is formed by integrally stacking an LCD (liquid crystal display) and a transparent tablet for inputting coordinates. The apparatus 2 is designed such that display and data input operations can be performed on the same coordinate plane. Referring to Fig. 7, reference numeral 3 denotes a stylus pen which is used to designate an arbitrary coordinate position on the tablet of the integral display/input device 2. The stylus pen 3 incorporates a switch for detecting contact with the tablet surface. A detection result obtained by this switch is sent to a processing function section arranged in the casing 1 through a cord 4. The integral display/input device 2 and the stylus pen 3 are controlled by the processing function section (a CPU 21 and the like).

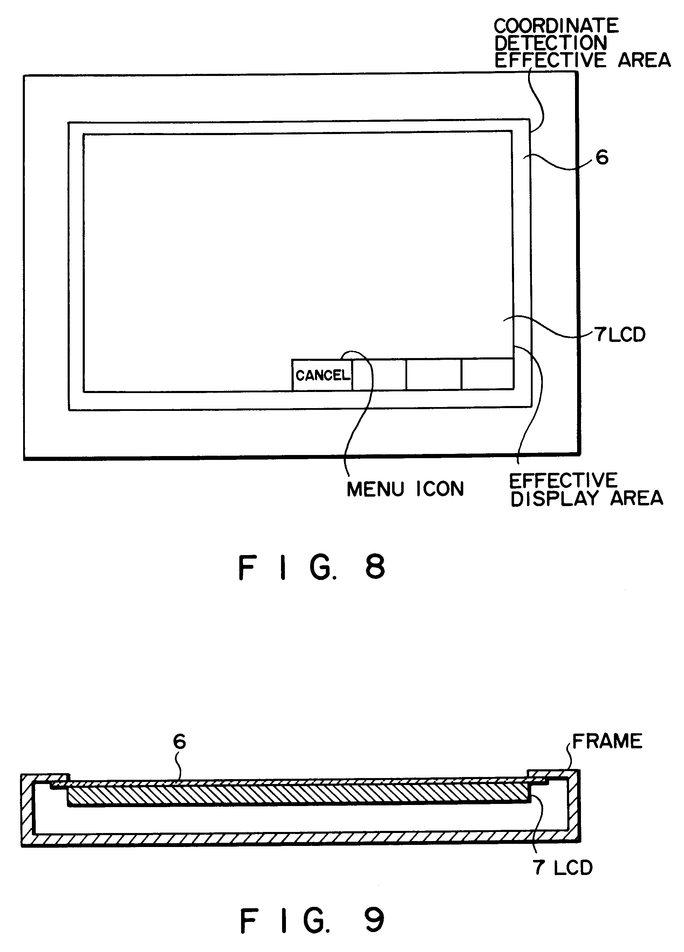

Fig. 8 is a plan view mainly showing the integral display/input device 2 of the information processing apparatus according to this embodiment. Fig. 9 is a cross-sectional view of the apparatus 2. As shown in Figs. 8 and 9, the integral display/input device 2 is formed by integrally stacking a transparent tablet 6 and an LCD 7 on each other. Note that Fig. 8 shows a state wherein a menu icon is displayed on the LCD 7.

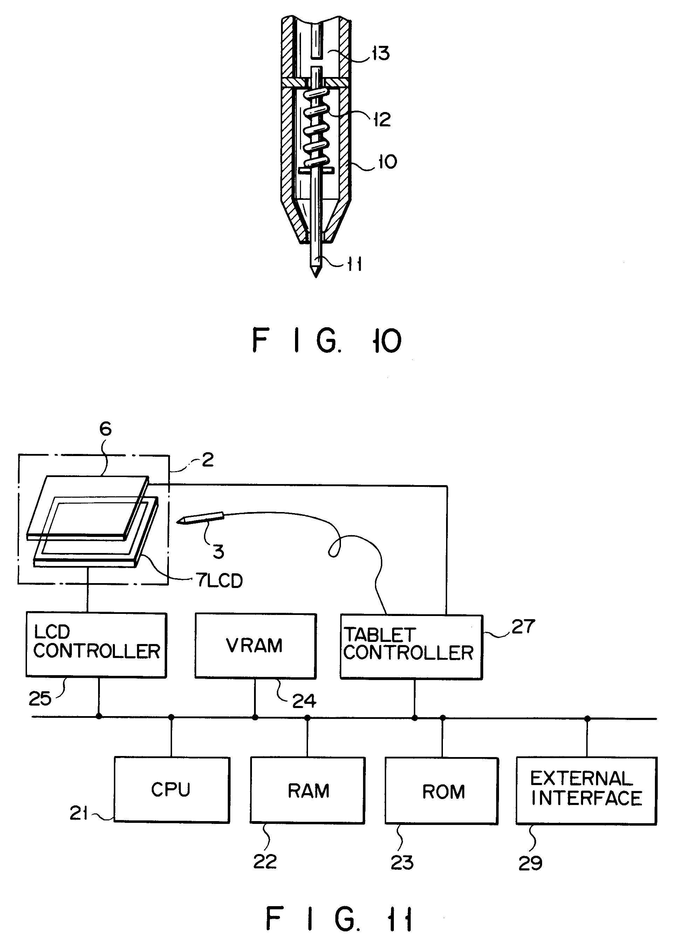

Fig. 10 is a sectional view showing an arrangement of a switch incorporated in the stylus pen 3. As shown in Fig. 10, in a normal state, an electrode portion 13 of a pen tit 11 in a pen shaft 10 is set in a non-contact state (OFF) by a spring 12. When, for example, hand-writing of a character or position designation (click) is to be performed by using the stylus pen 3, the pen tit 11 is depressed against the force of the spring 12, and the electrode portion 13 is set in a contact state (ON). By using this contact (ON) and non-contact (OFF) information (switch information), it is detected that icon designation, character hand-writing, or the like is performed within a coordinate detection effective area on the transparent tablet 6. Note that an ON/OFF state is acknowledged to the CPU 21 through a tablet controller 27 (to be described later) regardless of whether a switching operation is performed within a coordinate detection effective area on the transparent tablet 6.

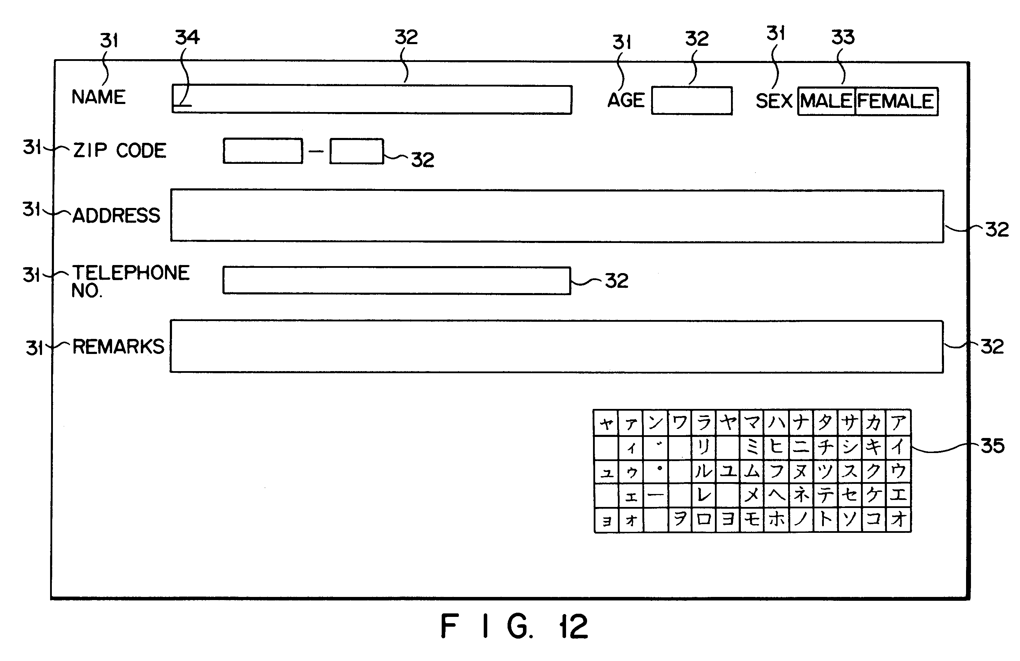

Fig. 11 is a block diagram showing an arrangement of the information processing apparatus. In the transparent tablet 6 of the integral display/input device 2, transparent electrodes are arranged in a glass plate in the X and Y orthogonal directions so as to constitute a matrix arrangement. Pulse voltages are sequentially applied to these electrodes so that an X-Y coordinate position designated by the stylus pen 3 is detected by electrostatic induction. The transparent tablet 6 and the stylus pen 3 are controlled by the tablet controller 27 (to be described later). The LCD 7 is controlled by an LCD controller 25 (to be described later).

The CPU 21 controls the overall information processing apparatus. A RAM 22 is a memory capable of a read/write operation and serves to store programs for defining operations of the CPU 21 and various types of data. The RAM 22 stores various types of information, e.g., patterns input by hand-writing on the transparent tablet 6. In addition, the RAM 22 has areas for holding an in-repeat flag, used when a character (key code) is input by using a software keyboard, a pen tit switch status for holding switch information, and the key code of a last input character. A ROM 23 is a read-only memory for storing a diagnostic program used after the power source for the information processing apparatus is turned on, a bootstrap program for starting the information processing apparatus, screen format data, display pattern data of software keyboards, and the like. A VRAM 24 is a bit map memory for storing display information. The LCD controller 25 performs display control of, e.g., display information transfer from the VRAM 24 to the LCD 7 and display information transfer from the CPU 21 to the VRAM 24. The tablet controller 27 performs a series of tablet control operations, e.g., scanning of the X and Y electrodes of the transparent tablet 6, detection of a voltage at a position designated by the stylus pen 3 (electrostatic coupling scheme), generation of X-Y coordinate data, and transmission of X-Y coordinate data to the CPU 21. An external interface 29 is an interface for performing data communication between the information processing apparatus and an external unit as needed.

An operation of this embodiment will be described below.

An input operation of address book data (name, age, zip code, address, telephone number, and remarks) will be described below. Fig. 12 shows a display screen for inputting address book data. Referring to Fig. 12, prompts 31 are pieces of information which are displayed as guides to explain the contents of data to be input. Input fields 32 are rectangular areas in which data are input. In a selection item 33, either "MALE" or "FEMALE" can be selected. A cursor 34 indicates a position at which data is input. A software keyboard (for kana input) 35 is used to input data. The software keyboard 35 will be described in detail later.

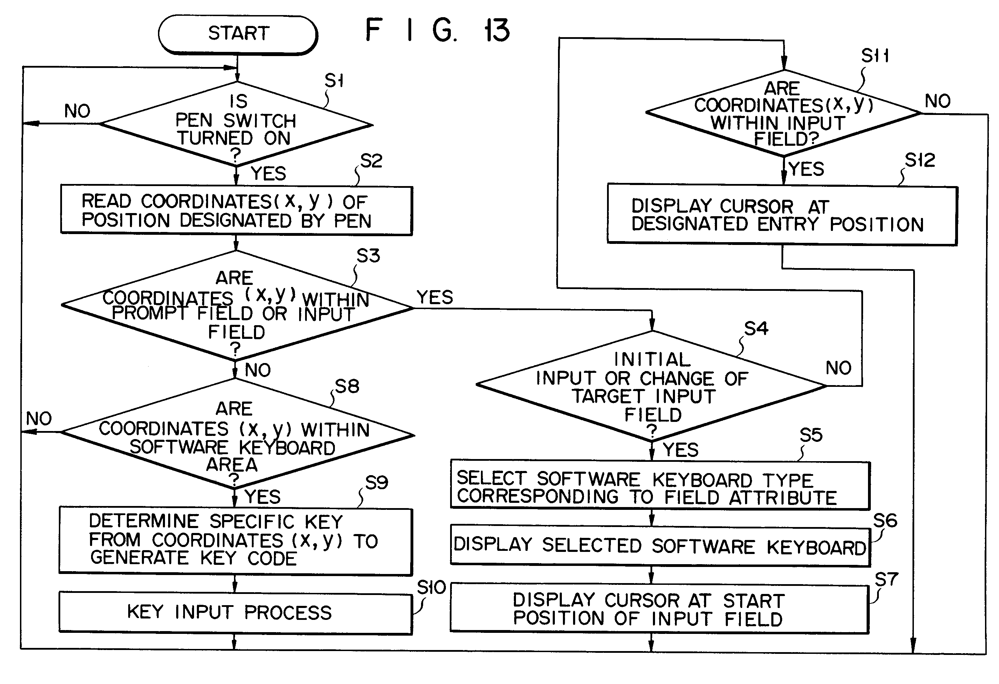

Data input processing by means of a software keyboard will be described below with reference to the flow chart shown in Fig. 13. The apparatus is started first, and the screen shown in Fig. 12, which is used to input address book data, is displayed on the LCD 7. At this time, the CPU 21 waits for input of coordinate data indicating an arbitrary position on the transparent tablet 6 by means of the pen 3 (step S1). When a position on the transparent tablet 6 is designated by the pen 3, it is detected whether the pen switch is turned on.

Upon detection of the change from the OFF state to the ON state of the pen switch, the tablet controller 27 reads coordinates (x,y), on the transparent tablet 6, designated by the pen 3 (step S2).

In this case, the CPU 21 checks whether the coordinates (x,y) are within an area in which a prompt 31 is displayed (prompt field) or an input field 32 (step S3). Discrimination of the position of the coordinates (x,y) is performed on the basis of screen format data stored in the RAM 22.

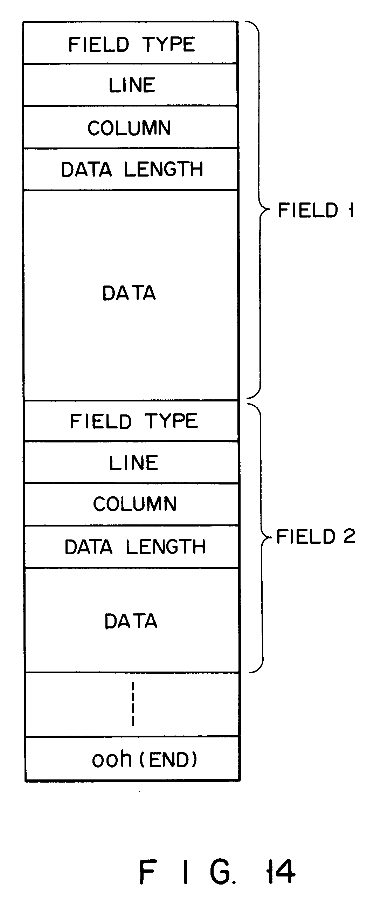

Screen format data are set in units of fields (fields 1, 2, ...). Fields defined in this case are a prompt display field and an input field. The screen format of each field is defined by "FIELD TYPE", "LINE", "COLUMN", "DATA LENGTH", and "INPUT DATA". As shown in Fig. 14, these data are respectively stored in predetermined areas allocated in the ROM 23.

"FIELD TYPE" data indicate the attributes of fields and are roughly classified into two types of data respectively defining a prompt display field and an input field. More specifically, "01h" indicates a prompt display field; "02h", a numeric input field; "03h", a kana input field; and "04", a composite input field (numeral, kana, and alphabet). Note that "00h" indicates the end of screen format data.

"LINE" is a display line number indicating the line position of a field.

"COLUMN" is a display column number indicating the column position of a field.

"DATA LENGTH" is information indicating the data length of display data or input data.

"DATA" indicates actual display data (prompt) or input data input to the same field.

In step S3, the coordinates (x,y) are discriminated on the basis of information indicated by "LINE" and "COLUMN" of a screen format.

If it is determined that the coordinates (x,y) are within a prompt field or an input field, the CPU 21 checks whether initial input to the field is performed or a change of a target input field is made, i.e., whether the pen 3 designates a field different from the field in which data is input last (step S4).

If initial input or a change of a target input field is determined, a software keyboard 35 corresponding to "FIELD TYPE" of the target input field in which data is to be input is selected (step S5) and displayed (step S6). Subsequently, the cursor is displayed at the start column of the input field (step S7). Fig. 12 shows a display screen used to input data to the item "NAME". Since kana input is required for the input field 32 of the item "NAME", "03h" is set in "FIELD TYPE" of the screen format corresponding to the "NAME" input field. As a result, the software keyboard 35 for kana input is displayed.

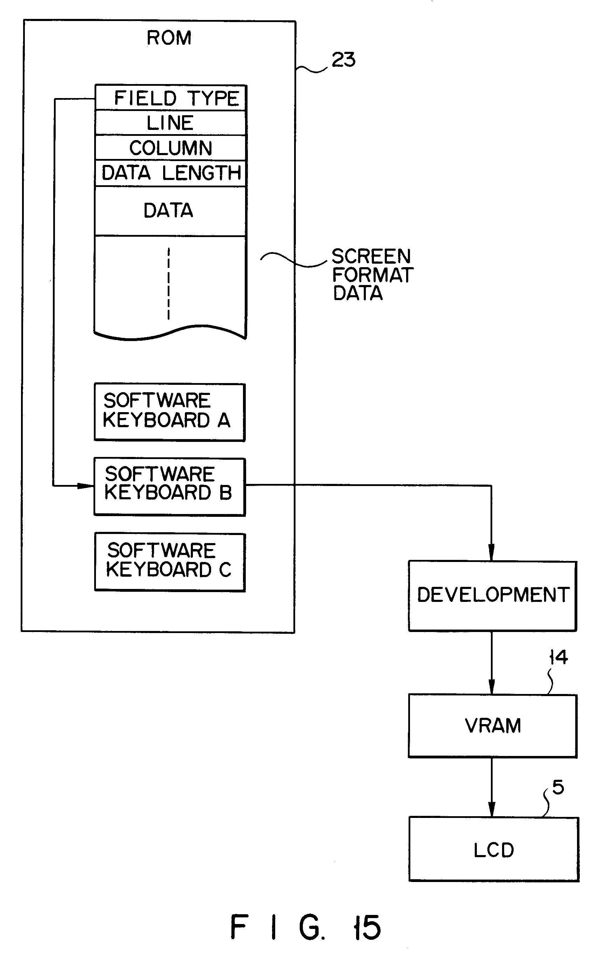

The flow of data in a case wherein a software keyboard is displayed will be described below with reference to Fig. 15. When a software keyboard is to be displayed, "FIELD TYPE" of a target input field in which data is input is referred. The data of software keyboards corresponding to "FIELD TYPE" are prepared in the ROM 23. In this embodiment, assume that three types of software keyboards (A through C) for kana input, composite character (alphanumeric and kana characters) input, and numeric input. The CPU 21 develops software keyboard data corresponding to "FIELD TYPE" and stores the resulting display image in the VRAM 24. The LCD controller 25 then displays the display image stored in the VRAM 24 in a predetermined area on the LCD 7 together with the screen format.

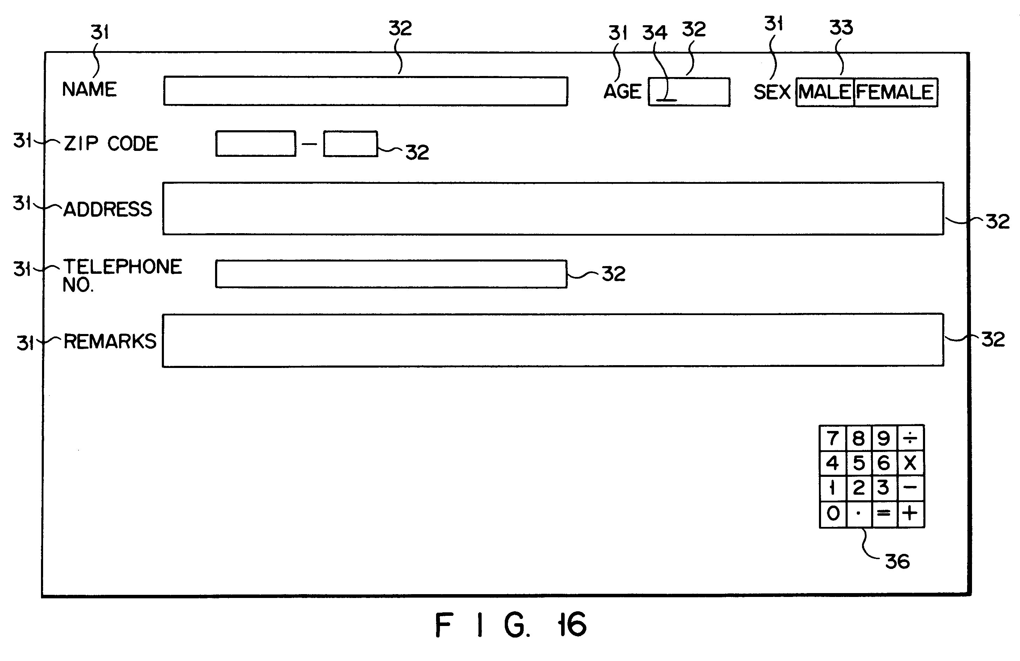

When data input is to be performed with respect to the input fields 32 corresponding to the items "AGE", "ZIP CODE", and "TELEPHONE No.", a software keyboard 36 constituted by numeric keys shown in Fig. 16 is displayed ("02h" numeric input field is designated in "FIELD TYPE"). By using the software keyboard 36, numerals "0" to "9" and a decimal point "." can be input. In addition, the software keyboard 36 includes keys "÷", "x", "+", "-", and "=" for four arithmetic operations.

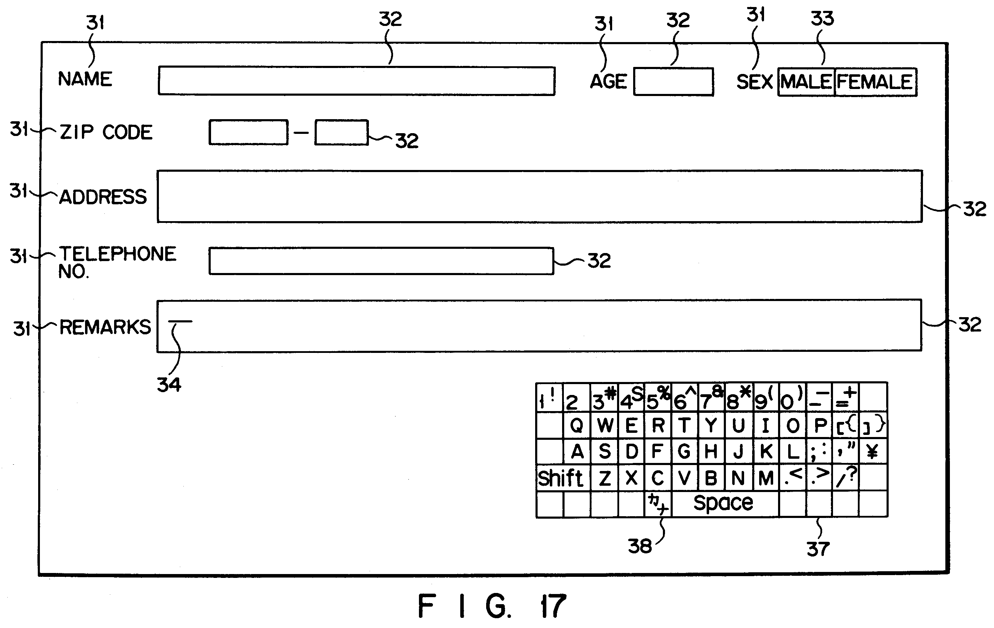

When data input is to be performed with respect to the input fields 32 corresponding to "ADDRESS" and "REMARKS", a software keyboard 37 constituted by alphabet keys shown in Fig. 17 is displayed ("04h" is set in "FIELD TYPE" to designate a composite input field). By using the software keyboard 37, alphabetic characters, numerals, and various symbols can be input. The respective keys are displayed in, e.g., a JIS arrangement. A kana shift key 38 is arranged as one of the keys. When this kana shift key 38 is clicked, the software keyboard 35 shown in Fig. 12 is displayed. At this time, the software keyboard 35 is displayed simultaneously with the software keyboard 37 in another area on the display screen.

Instead of this simultaneous display of the keyboards, the software keyboard 35 may be displayed in place of the software keyboard 37. In this case, an alphanumeric shift key is arranged as one of the keys of the software keyboard 35 so that the software keyboard 35 can be freely switched to the software keyboard 37.

When the software keyboard and the cursor 34 are displayed in steps S5, S6, and S7, the CPU 21 waits for input of coordinate data stored in the ROM 23.

When the coordinate data is input, it is checked whether the coordinates (x,y) are within an area in which the software keyboard is displayed (step S8).

If the coordinates (x,y) designate the software keyboard, the position of a specific key is determined from the coordinates (x,y), and the corresponding key code is generated (step S9). Determination of a key position is performed on the basis of information indicating each key position included in software keyboard data stored in the ROM 23.

The generated key code is stored in a predetermined area of "DATA" in the screen format data. Subsequently, a character as input data is displayed at the position of the cursor 34 on the display screen (key input processing in step S10).

If the coordinates (x,y) of the input coordinate data do not indicate a change of a target input field (step S4) but are within the input field 32 (step S11), the cursor 34 is displayed at the designated input position (a column position including the coordinates (x,y) (step S12). With this operation, data input can be performed with respect to an arbitrary position in the input field 32. When the area of the selection item 33 for the item "SEX" is designated, information indicating "MALE" or "FEMALE" is stored at a column position including the coordinates (x,y), and at the same time, the display mode is switched to reverse display or the like, thus allowing an operator to determine whether "MALE" or "FEMALE" is selected (Fig. 13 shows no steps for this processing). If it is determined in step S11 that the coordinates are not within an input field, it is determined that the pen 3 is in a prompt field, and the flow returns to step S1.

In the information processing apparatus using the integral display/input device, the software keyboards 35, 36, and 37 are used to perform data input. Therefore, the integral display/input device serves as a man-machine interface which allows an operator to perform an input operation as if he/she was using a sheet of paper and a pencil, and data input can be performed without differences between individuals. When an initial input state is set or an target input field is to be changed, a software keyboard is automatically displayed by designating a prompt area or a input field. Since it is a natural action for an operator to designate an input field with the pen, excellent operability without a strange feeling can be provided.

In addition, if a hop-up keyboard corresponding to the type of a target input field, i.e., an input attribute (kana, numeric, or composite) is automatically displayed, characters which can be input can be easily known, thus shortening the time for key selection and improving the operability.

In the above-described embodiment, when data input is to be performed with respect to the input fields 32, only the software keyboards are used. However, a character input scheme based on handwriting may be selectively used in addition to the above data input scheme.

The second embodiment of the present invention will be described below.

An information processing apparatus of the second embodiment is designed such that the display position of a software keyboard is arbitrarily set, and various types of software keyboards are prepared.

A scheme for performing a display operation without fixing the display position of each software keyboard so as not to interfere with a data input operation will be described below.

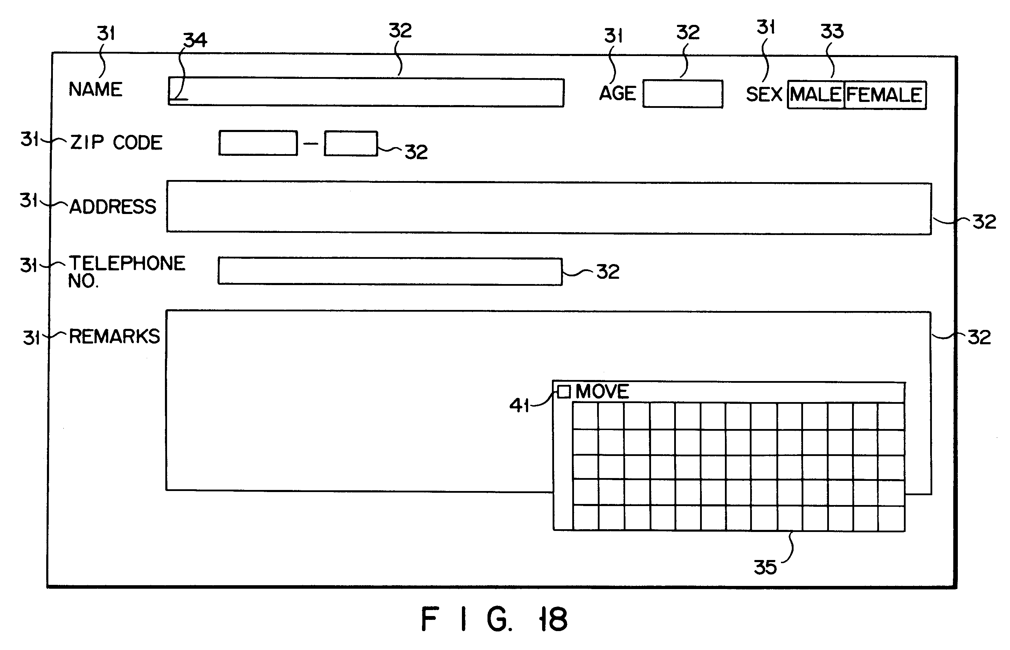

An input operation of address book data (name, age, zip code, address, telephone number, and remarks) will be described first. Fig. 18 shows a display screen for inputting address book data. The same reference numerals in Fig. 18 denote the same parts as in Fig. 12, and a description thereof will be omitted. Note that Fig. 18 shows a case wherein a software keyboard is displayed to partially overlap the input field of "REMARKS".

On the data input screen shown in Fig. 18, a character is input at a position indicated by a cursor 34. In this case, a character input operation is performed by arbitrarily selecting a method based on an on-line hand-written character recognition function or a method based on a software keyboard display on the screen. When the on-line hand-written character recognition function is to be used, hand-writing of a character is performed within an input field 32 indicated by the cursor 34. With this operation, character recognition processing for the hand-written character pattern is executed, and the result is displayed at the position of the cursor 34. If, for example, "A" is hand-written at a position designated by the cursor 34 by using a stylus pen 3, character recognition processing is executed with respect to the character pattern to generate a character code. As a result, "A" is displayed in place of the hand-written character pattern.

Note that input of the hand-written character pattern to the input field 32 is determined when the switch state (non-contact/contact state of an electrode 13) of the stylus pen 3 is changed from an OFF state to an ON state, and coordinates (x,y) of the designated coordinate position are within the input field. Whether the position designated by the stylus pen 3 is within an input field is determined on the basis of information (format data) of each field stored in a ROM 23. As format data of, e.g., each field, pieces of information associated with the type of character to be input (e.g., numeric, kana, alphabet, or composite type), a line position, a column position, the data length (the number of characters) of input data, input data, and the like are set in advance.

That is, if the designated coordinate position (x,y) is within an area indicated by line and column positions, it is determined that the input operation is to be performed with respect to the input field. In addition, character recognition processing may be performed only for a character whose character type information stored as format data is specified.

When the character obtained by the character recognition processing is displayed in the input field 32 in this manner, the cursor 34 is moved to a position at which the next character is to be input. Subsequently, characters are sequentially input by hand-writing in the same manner as described above. Note that if a position at which the cursor 34 is not present is designated by the stylus pen 3, the cursor 34 is displayed at the designated line/column position to change the input target position. This operation can be performed with respect to other input fields.

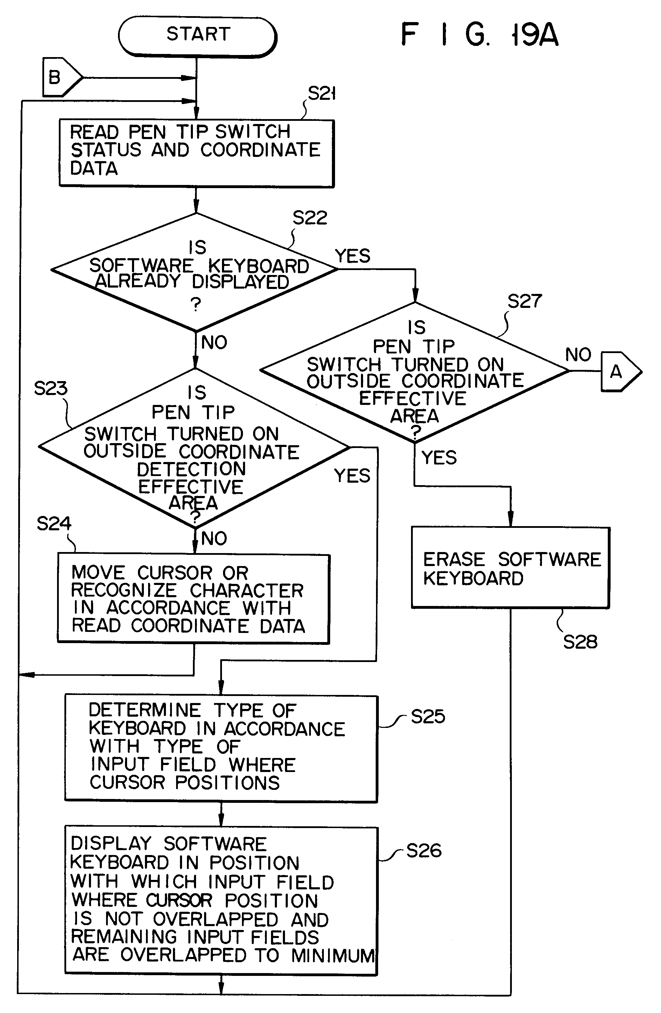

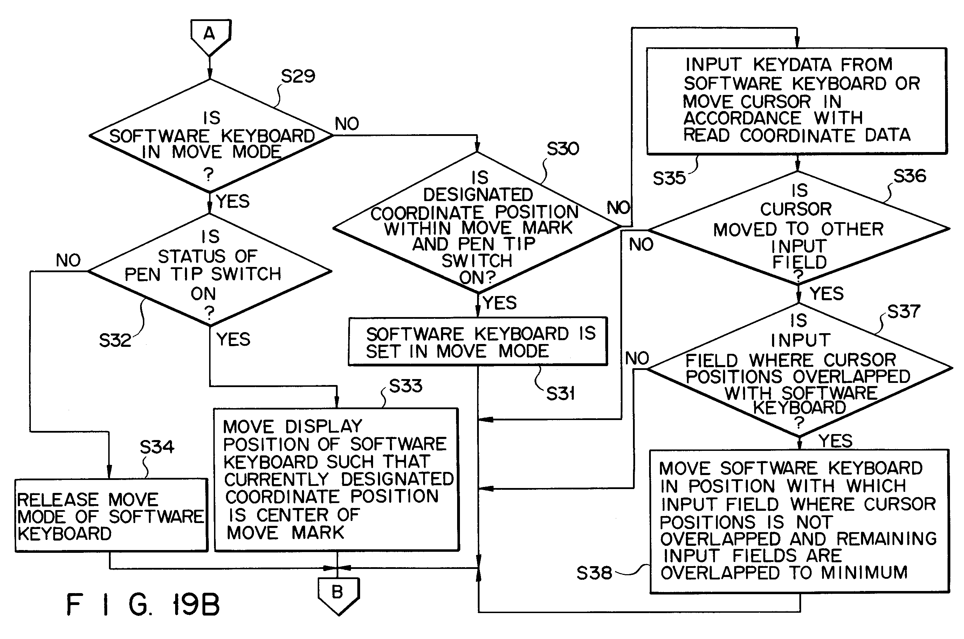

If a character input is not properly performed (the result of character recognition processing is not correct), the corresponding character can be input by using a software keyboard 35. A procedure for displaying the software keyboard 35 will be described below with reference to Figs. 19A and 19B.

A pen tit switch status and coordinate data indicating a designated position on the transparent tablet 6 are read (step S21). At this time, if no software keyboard is displayed, and the switch state of the pen tit switch is not changed from an OFF state to an ON state outside the coordinate detection effective area of the transparent tablet 6 (an arbitrary position on the transparent tablet 6 is designated), the cursor 34 is moved or character recognition processing is performed in accordance with the read coordinate data in the same manner as described above (steps S22 through S24).

If it is determined in step S23 that the pen tit switch is turned on outside the coordinate detection effective area of the transparent tablet 6, it is determined that display of the software keyboard 35 is designated. As a result, the type of software keyboard is determined in accordance with a character type corresponding to an input field at which the cursor 34 is currently positioned (step S25). Subsequently, the software keyboard determined in step S25 is displayed at a position at which the software keyboard does not overlap the input field in which the cursor 34 (indicating an area in which a character to be input next is displayed) on the display screen is present, and an area where the software keyboard overlaps each input field is minimized (step S26).

The optimal display position of a software keyboard is determined on the basis of a keyboard size, an input field position, a cursor position, and the like.

Fig. 18 shows the display state of the software keyboard at this time. On the display screen in Fig. 18, there is an area where no input field is displayed, and the software keyboard 35 for kana input corresponding to the item "NAME" is displayed within the area. Note that various types of software keyboards will be described in detail later.

As described above, in this embodiment, a software keyboard can be displayed on the screen by one operation, i.e., depressing (changing the pen state from an OFF state to an ON state) a pen tit 11 of the stylus pen 3 against a proper position outside the coordinate detection effective area of the transparent tablet 6, e.g., the upper surface of a desk or the like on which the casing or the apparatus is mounted. That is, a software keyboard can be displayed, with a simple operation, without performing cumbersome operations, i.e., displaying an icon menu or the like and selecting a specific icon for designating display of a software keyboard.

If the pen tit switch is turned off outside the coordinate detection effective area of the transparent tablet 6 while the software keyboard 35 is displayed (steps S21, S22, and S27), the displayed software keyboard is erased (step S28). In this manner, a software keyboard can be erased with a simple operation.

If it is determined in step S27 that the pen tit switch is turned on within the coordinate detection effective area of the transparent tablet 6, it is checked whether the software keyboard is in a "MOVE" mode (step S29). The "MOVE" mode is a mode for moving a software keyboard to an arbitrary position. If it is determined in step S29 that the software keyboard is not currently set in the "MOVE" mode, it is checked on the basis of the read coordinate position whether the "MOVE" mode is designated (step S30). That is, the "MOVE" mode is designated by designating (ON state of the pen tit switch) a rectangular frame (MOVE mark 41) located on the left side of the word "MOVE" near the upper left corner of a software keyboard shown in, e.g., Fig. 18. With this operation, the software keyboard is set in the "MOVE" mode and can be moved to an arbitrary position (step S31).

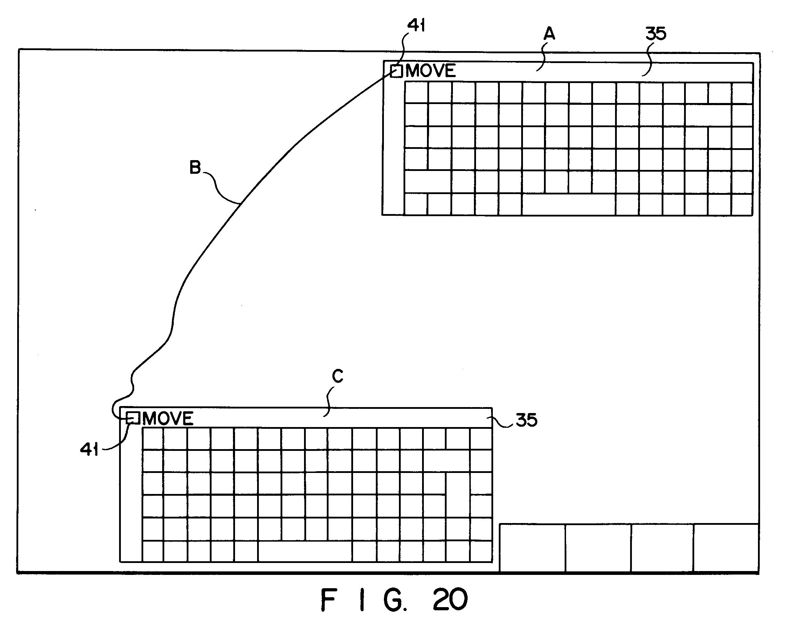

If the pen tit switch is in an ON state in the "MOVE" mode (steps S21, S22, S27, S29, and S32), the display position of the software keyboard 35 is moved such that the coordinate position designated by the stylus pen 3 is located in the center of the MOVE mark 41 (step S33). Fig. 20 shows a display screen on which the software keyboard 35 is moved.

When the software keyboard 35 is displayed at a position A in Fig. 20, the MOVE mark 41 is designated by the stylus pen 3, and the designated position is moved in this state. If, for example, the designated position is moved as indicated by a locus B in Fig. 20, the software keyboard 35 is moved in such a manner that the position of the MOVE mark 41 follows the position designated by the stylus pen 3.

When the software keyboard 35 is moved to a desired position C in Fig. 20 by moving the designated position while monitoring the display position of the software keyboard 35, the stylus pen 3 is removed from the transparent tablet 6. With this operation, a change is pen tit switch status to an OFF state is read (step S32). At this time, the "MOVE" mode of the software keyboard 35 is released (step S34), and the display position of the software keyboard 35 is confirmed. Although Fig. 20 shows both the initial state and the confirmed state of the software keyboard 35 for the sake of description, a single software keyboard 35 is displayed in practice.

When data input is to be performed by using the software keyboard 35, a desired key position is designated first. The CPU 21 performs key data input processing (character input), a cursor moving operation, or the like in accordance with the input coordinate data (step S35). If this processing is a cursor moving operation, and if the cursor is moved to another input field and the input field to which the cursor is moved and the software keyboard overlap each other (steps S36 and S37), the software keyboard is moved to a position at which the software keyboard does not overlap the input field and an area where the software keyboard overlaps each input field is minimized (step S38).

When a software keyboard is read out, the software keyboard is displayed at a position at which an area where it overlaps an area (indicated by the cursor 34) for displaying input characters and the like is minimized. Since the software keyboard 35 can be moved to an arbitrary position by designating the "MOVE" mode, if the display position of the software keyboard in an initial state is not desirable for a user, the display position can be easily changed. Since the user can perform data input while always referring to the display contents, an improvement in operability can be achieved.

In the display scheme described so far, the display position of a software keyboard is not fixed to perform a display operation without interfering with data input. In the above description, only the software keyboard 35 for kana input is used. However, various types of software keyboards prepared in the information processing apparatus of this embodiment will be described below.

In the following description, assume that software keyboards, each having keys (input areas) arranged in a predetermined order, i.e., software keyboards corresponding to the JIS arrangement and the Japanese syllabary arrangement for inputting kana characters, and the JIS arrangement and the ABC arrangement for inputting alphanumeric characters (uppercase and lowercase characters), are mainly prepared.

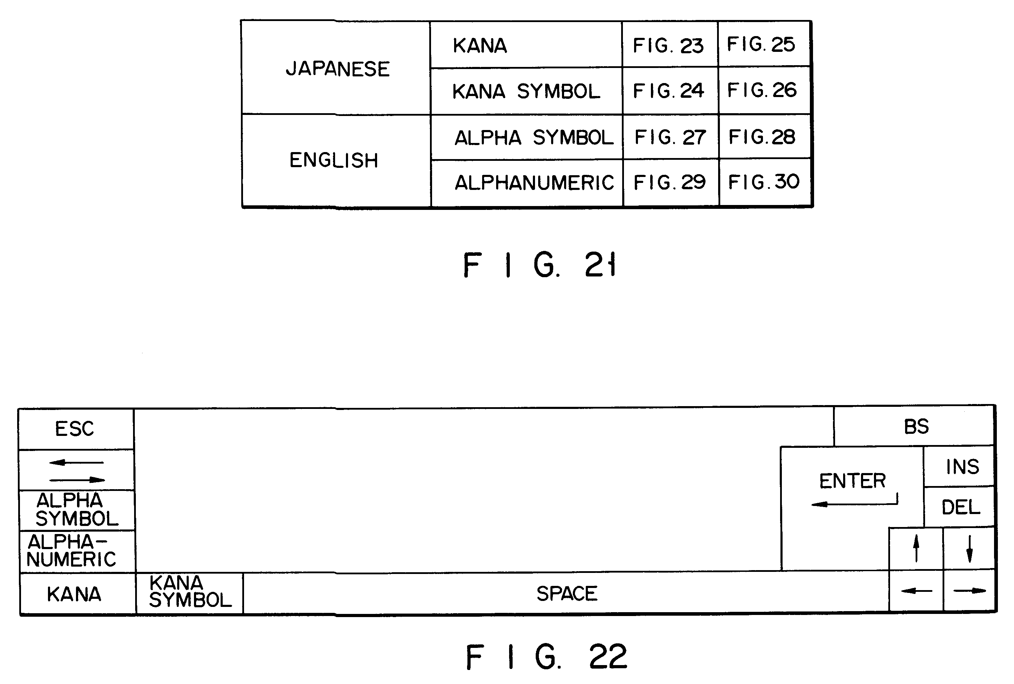

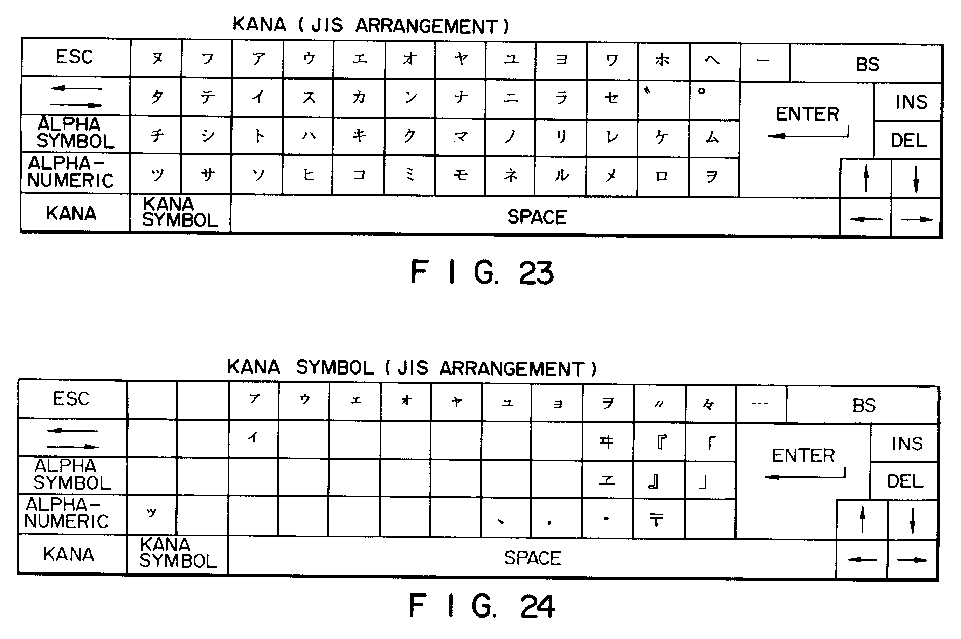

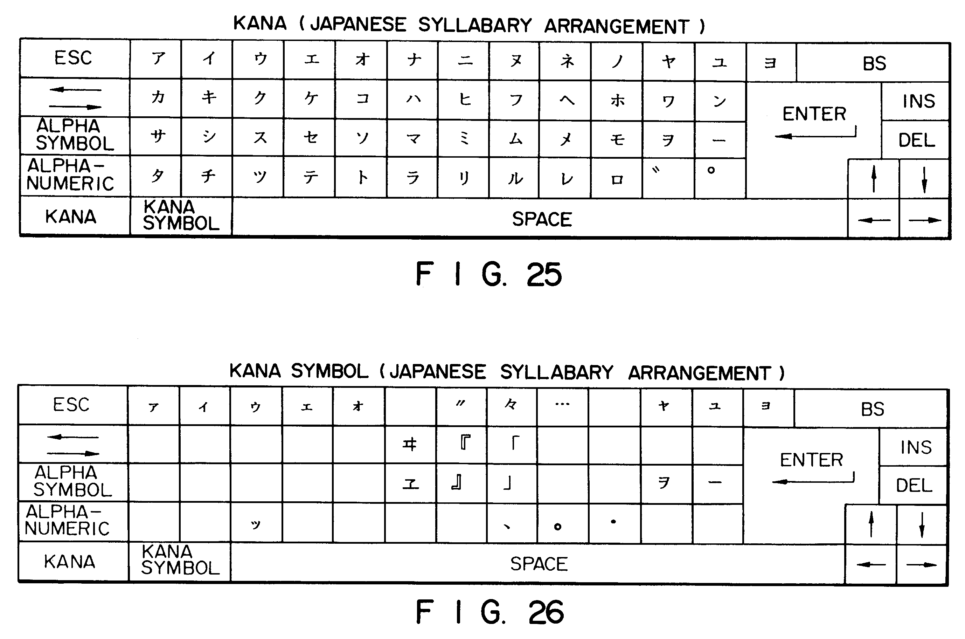

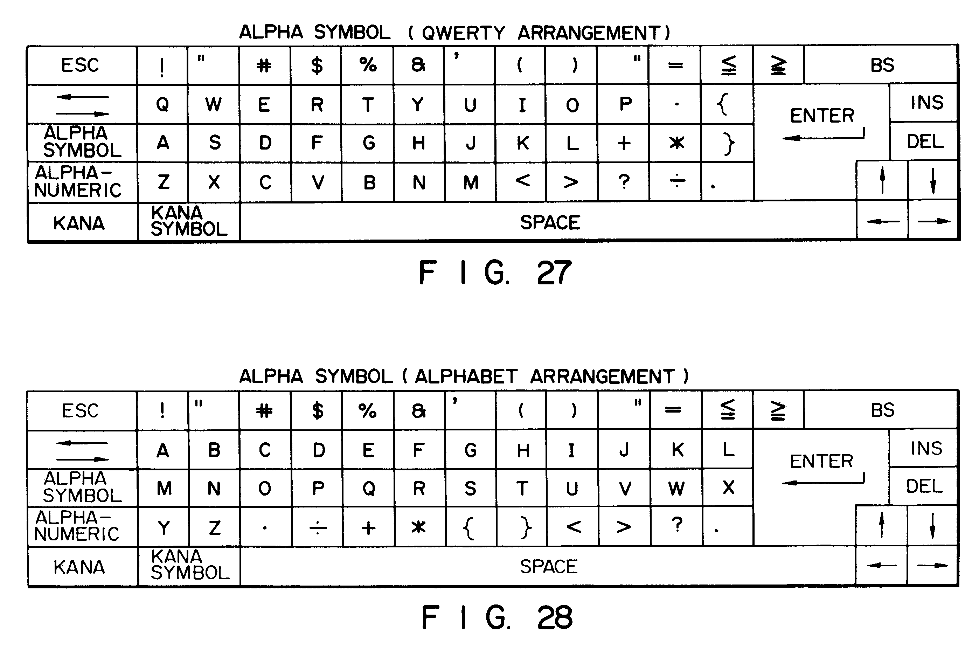

In the software keyboards in the embodiment, the portion shown in Fig. 22 is common, and uncommon portions are switched in accordance with the types of software keyboards. Figs. 23 through 30 respectively show software keyboards in detail, which correspond to the key arrangements shown in Fig. 21.

A method of selecting one of the software keyboards shown in Figs. 23 through 30 will be describe below.

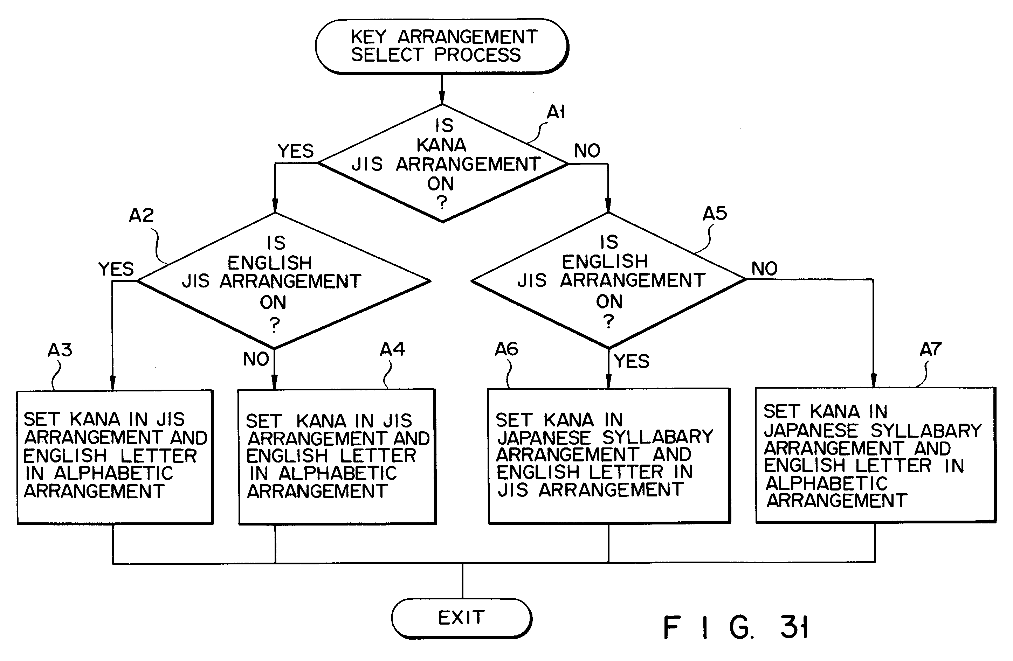

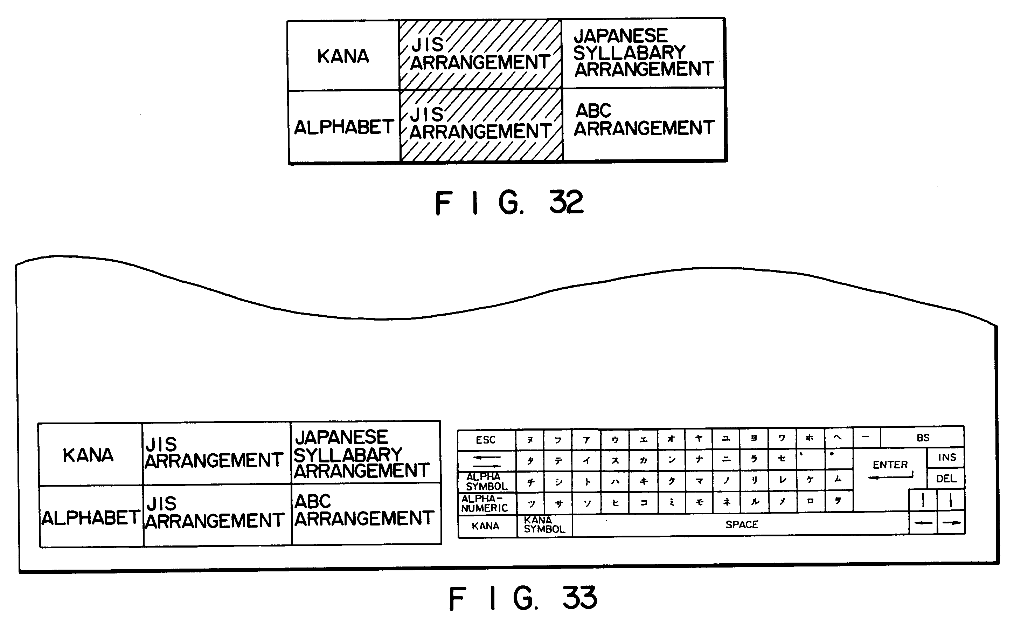

In order to select a software keyboard to be used from the software keyboards having the JIS arrangement for kana input, the syllabary arrangement for kana input, the JIS arrangement for alphanumeric input, and the ABC arrangement for alphanumeric input, a switch command for selecting a keyboard is used. For example, when a switch command is designated from the menu icon, a key arrangement select process is started. Fig. 31 is a flow chart showing a setting procedure in this key arrangement select process. When the key arrangement select process is started, a screen for key arrangement selection shown in Fig. 32 is displayed. A software keyboard to be used is selected by arbitrarily picking (designating by the stylus pen 3) one of the icons indicating the respective key arrangements. If, for example, the kana JIS arrangement and the alphanumeric JIS arrangement are turned on, the software keyboards having the kana and alphanumeric JIS arrangements can be used (steps A1 through A3). Similarly, a desired key arrangement of other key arrangements can be set by designating a predetermined icon, as indicated by the flow chart in Fig. 31 (steps A1 through A7). The icon selected in this manner is subjected to reverse display (indicated by hatching), as shown in Fig. 32. Once a key arrangement is selected before the software keyboard is used, this selection need not be changed during a character input operation.

Fig. 33 shows a display screen on which a software keyboard is displayed when a key arrangement is set as shown in Fig. 32. Fig. 33 shows the software keyboard of the kana input JIS arrangement. Note that the icons for setting key arrangements may be erased when, for example, a key arrangement is set and a corresponding software keyboard is displayed. With this operation, the display screen can be effectively used.

A method of operating a software keyboard displayed on the screen will be described below. Similar to a general physical keyboard, a software keyboard can be operated to select a character type (alphanumeric, alpha symbol, hiragana, kana, and kana symbol) which can be input, in accordance with a key shift state. If, therefore, a desired character key is not present during a character input operation, the shift state is arbitrarily changed to change the keyboard pattern.

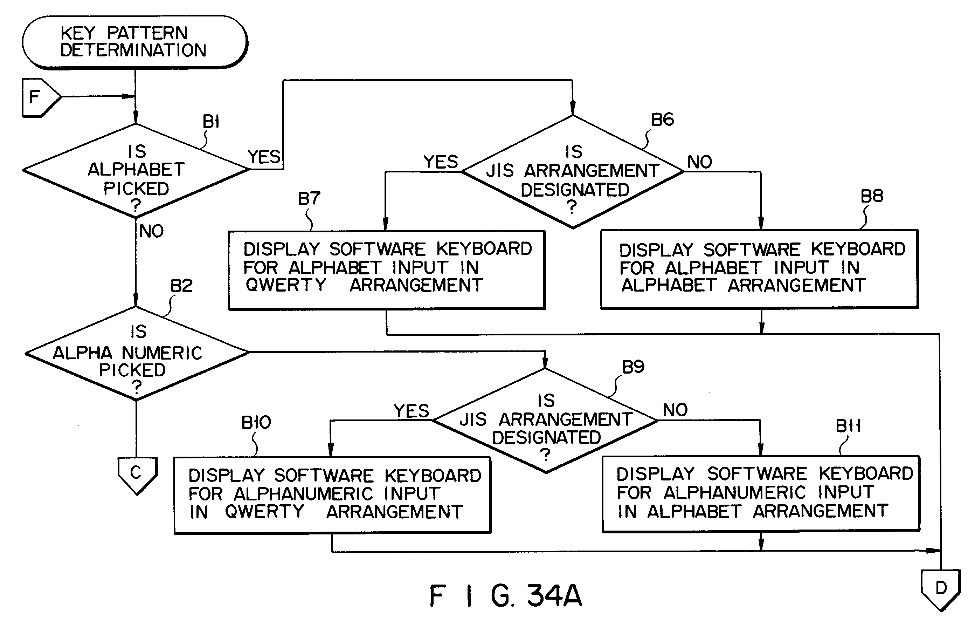

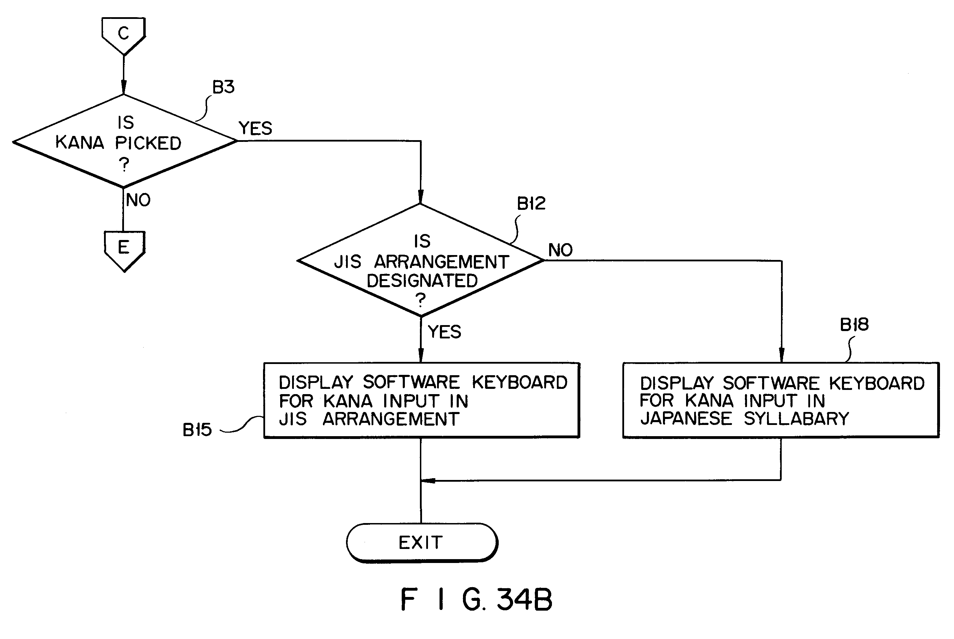

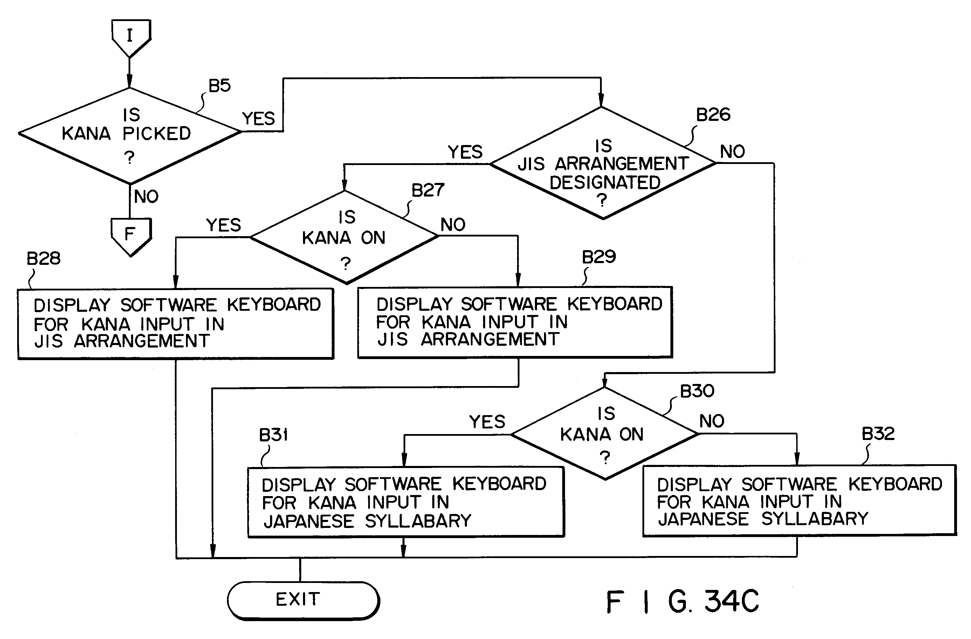

More specifically, one of the keys "ALPHANUMERIC", "ALPHA SYMBOL", "KANA", and "KANA SYMBOL" included in the portion shown in Fig. 22, which is common to the respective software keyboards, is selected to change the keyboard pattern. Figs. 34A through 34C are flow charts showing a detailed procedure for determining a software keyboard when a character type is designated by means of a keyboard.

When one of the keys "ALPHANUMERIC", "ALPHA SYMBOL", "KANA", and "KANA SYMBOL" is picked on a software keyboard, the processing shown in Figs. 34A through 34C is started. The CPU 21 determines the type of a character to be input, in accordance with a coordinate position designated by the stylus pen 3 (steps B1, B2, B3, and B5).

If the picked key is a kana symbol and the JIS arrangement is designated in advance, the software keyboard for alpha symbol input in the QWERTY arrangement shown in Fig. 27 is displayed (steps B1, B6, and B7). If the alphabet arrangement is designated, the software keyboard for alpha symbol input in the alphabet arrangement shown in Fig. 28 is displayed (steps B6 and B8).

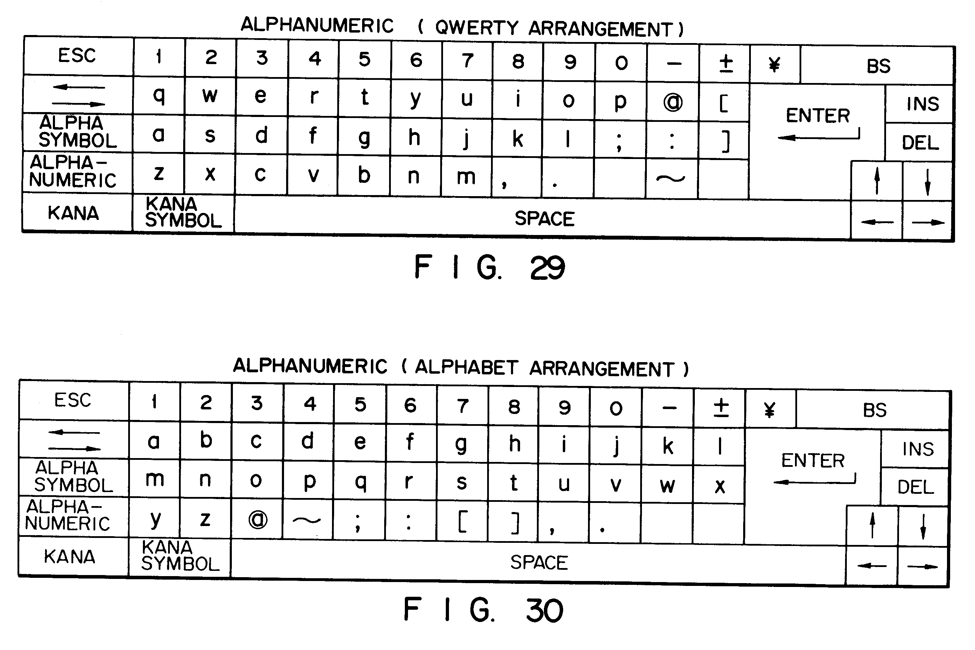

If the picked key is an alpha symbol and the JIS arrangement is designated in advance, the software keyboard for alphanumeric input in the QWERTY arrangement shown in Fig. 29 is displayed (steps B2, B9, and B10). If the alphabet arrangement is designated, the software keyboard for alphanumeric input in the alphabet arrangement shown in Fig. 30 is displayed (steps B9 and B11).

If the picked key is a kana symbol and the JIS arrangement is designated in advance, the software keyboard for kana symbol input in the JIS arrangement shown in Fig. 24 is displayed (steps B3, B12, and B15). If the Japanese syllabary arrangement is designated in step B12, the software keyboard for kana input in the Japanese syllabary arrangement is displayed (steps B3, B12, and B18).

If the picked key is a kana character and the JIS arrangement is designated in advance, and if "KANA SYMBOL" is turned on, the software keyboard for kana symbol input in the JIS arrangement shown in Fig. 24 is displayed (steps B5, B26, B27, and B28). If "KANA SYMBOL" is not turned on in step B27, the software keyboard for kana input in the JIS arrangement shown in Fig. 23 is displayed (steps B5, B26, B27, and B29). If the Japanese syllabary arrangement is designated in step B26, and "KANA SYMBOL" is turned on, the software keyboard for kana symbol input in the Japanese syllabary arrangement shown in Fig. 26 is displayed (steps B5, B26, B30, and B31). If "KANA SYMBOL" is not turned on in step B30, the software keyboard for kana input in the Japanese syllabary arrangement shown in Fig. 25 is displayed (steps B5, B26, B30, and B32).

As described above, since only one character is displayed on a key top, and keyboard patterns can be arbitrarily switched, characters are easy to see and a desired key can be easily picked. In addition, since a key arrangement can be arbitrarily selected, software keyboards suitable for users can be used, and a character input operation can be efficiently performed. For example, a user who is accustomed to a physical keyboard may select the JIS standard key arrangement, whereas a user who is not accustomed to it may select the Japanese syllabary arrangement or the alphabet key arrangement.

A data input scheme using a software keyboard will be described below with reference to Figs. 39A and 39B.

Input of character data is normally performed when the pen tit switch status of the stylus pen 3 is changed from an OFF state to an ON state on a key top display of the software keyboard. In this embodiment, the same character can be continuously input without changing the pen tit switch status from an ON state to an OFF state.

The tablet controller 27 outputs HW interrupt signals to the CPU 21 at intervals of, e.g., 10 msec, thus calling an interrupt processing routine.

The CPU 21 obtains position coordinates designated, on the transparent tablet 6, by the stylus pen 3, and the state of the pen tit switch (switch status) of the stylus pen 3 (step C1). Subsequently, it is checked whether an in-repeat flag of the RAM 22 is set at "1" (step C2). In a normal data input operation (non-repeat operation), the in-repeat flag is set at "0". In contrast to this, in a continuous input (in-repeat) operation, the in-repeat flag is set at "1".

If it is determined in step C2 that the in-repeat flag is not set at "1", non-repeat processing is performed. That is, if the pen tit of the stylus pen 3 is positioned on the displayed software keyboard pattern and the pen tit switch status stored in the RAM 22 is OFF, and if the pen tit switch status obtained in step C1 is ON (steps C3 and C4), a key code corresponding to a key top on which the pen tit is positioned is generated and input to the apparatus as a key input to be saved in a predetermined area in the RAM 22 (steps C5 through C7). In addition, the in-repeat flag is set at "1" (step C8). In order to perform the next data input operation, the switch status obtained in step C1 is saved in the RAM 22 (step C9).

If it is determined in step C2 that the in-repeat flat is set at "1", in-repeat processing is performed. That is, if the pen tit switch is ON, and the pen tit is positioned on a key top corresponding to a key code input immediately before it is saved in the RAM 22 in step C7 (steps C10 through C13), the counter value saved in the RAM 22 is decremented by one (step C14). Note that this counter value is used to set input intervals when characters are continuously input.

If the counter value becomes "0" (step C15), the key code is input, as a key input, to the apparatus (step C16). The counter value is then initialized (in this case, the initial value is set to be "10") (step C17). That is, when HW interrupts occur at intervals of 10 msec and the counter value is set to be the initial value "10", if the pen tit is continuously located on the key top of a key after a corresponding key code is input, and the pen tit switch is ON, the same key code is continuously input at intervals of 100 msec.

Note that if the pen tit switch is OFF, or the pen tit is not positioned on a key top corresponding to a key code input immediately before it is saved in the RAM 22 (steps C10, C11, and C13), the in-repeat flag is reset (set at "0") to complete the in-repeat processing (step C18).

In the above embodiment, the switch is arranged on the pen tit of the stylus pen 3. However, even if no switch is arranged on the pen tit, the same function as described above can be realized by using a tablet capable of detecting whether coordinate detection can be performed. In this case, a state wherein coordinate detection can be performed is regarded as a switch ON state, and vice versa.

In an input operation of data such as characters by using a software keyboard, even if the same character is to be continuously input, the pen tit switch need not be repeatedly turned on/off. This is because such an input operation can be performed by continuously designating the key top of the same character for a predetermined period of time using the stylus pen 3. Therefore, the input operation can be simplified to improve the operability of the apparatus.

In the above embodiment, only one software keyboard is displayed on the screen. However, a plurality of software keyboards may be simultaneously displayed to perform a data input operation.

In addition, the types of software keyboards are not limited to those described in the above embodiment. For example, a ten-key pad may be used.

Furthermore, in the above embodiment, various types of arrangements of character (symbol) key portions are prepared. However, it is apparent that various types of arrangements of other keys (e.g., the key portion shown in Fig. 22) can be prepared.

Moreover, in the above embodiment, the bit pattern of each software keyboard is stored in the ROM 23. However, such a bit pattern may be stored in an external auxiliary storage unit such as a floppy disk or a hard disk unit to be loaded in the RAM 22.

## Claims

1. A data input system in an information processing apparatus having an integral display/input device (2) formed by integrally stacking a display unit and a coordinate input unit, and position designating means (3) for designating an arbitrary coordinate position on said coordinate input unit, which are used for data input, characterized by comprising:

first display means (21, 23, 24, 7) for causing said display unit to display a data input screen on which at least one input field for displaying contents of input data is set;

attribute storage means (22) for storing an attribute of input data corresponding to the input field;

logic keyboard storage means (22) for storing information associated with a plurality of logic keyboards corresponding to the types of attributes stored in said attribute storage means, said plurality of logic keyboards being displayed to input data of specific contents;

input field discriminating means (3, 27, 21, 23) for discriminating a target input field on a data input screen displayed by said first display means;

attribute discriminating means (21, 22, 23) for discriminating an attribute corresponding to the input field discriminated by said input field discriminating means by referring to said attribute storage means;

second display means (21, 24, 25, 7) for displaying a logic keyboard corresponding to the attribute discriminated by said attribute discriminating means on the basis of the information stored in said logic keyboard storage means; and

means (3, 27, 21) for performing data input by using the logic keyboard displayed by said second display means.

2. A system according to claim 1, characterized in that said logic keyboard is constituted by keys required to perform the data input operation.

3. A system according to claim 1, characterized in that the attribute includes a numeric input field, a kana input field, and a composite (numeric, kana, and alphabet) input field.

4. A system according to claim 1, characterized in that said second display means includes means (21, 23, 25, 7) for displaying said plurality of logic keyboards, and means (3, 27, 21, 23, 25, 7) for switching said plurality of logic keyboards.

5. An information processing apparatus, including an integral display/input device (2) formed by integrally stacking a display unit and a coordinate input unit, for causing said display unit to display, as needed, an input area indicating a specific area on said coordinate input unit, said input area indicating specific processing contents and designating execution of the specific processing contents, characterized in that there is provided

display means (21, 7, Fig. 19A) for displaying the input area at an arbitrary position in accordance with contents which are already displayed on said display unit.

6. An apparatus according to claim 5, characterized in that said display means includes means (21, 7, Fig. 19A) for, when a character display area in which input characters are to be displayed is present on a display screen, displaying the input area at a position where the input area and the character display area do not overlap.

7. An apparatus according to claim 5, characterized by further comprising:

discriminating means (21, 7, Fig. 19) for, when a position of a character display area in which input characters are to be displayed is changed, discriminating whether the character display area and the input area overlap; and

display position changing means (21, 7, Fig. 19) for changing a display position of the input area to a position where the input area does not overlap the character display area when said discriminating means discriminates that the character display area and the input area overlap.

8. An apparatus according to claim 5, characterized in that said display means includes means (21, 7, Fig. 19A) for, when another input area, a character display area in which input characters are to be displayed, and an image display area in which an input image is to be displayed are already displayed, displaying the input area at a position at which an area where the input area overlaps the other areas is minimized.

9. An apparatus according to claim 5, characterized by further comprising:

discriminating means (7, 3, 27, 21, Fig. 19B) for discriminating whether a designated coordinate position designates movement of the input area displayed by said display means; and

display position changing means (21, 25, 7, Fig. 19B) for changing a display position of the input area in accordance with an arbitrarily designated coordinate position when said discriminating means discriminates that movement of the input area is designated.

10. An information processing apparatus including an integral display/input device formed by integrally stacking a display unit and a coordinate input unit, characterized by comprising:

means (23) for storing patterns of logic keyboards for inputting data to said information processing apparatus in accordance with information input from said coordinate input unit;

logic keyboard display means (21, 7) for displaying the pattern of said logic keyboard on said display unit; and

means (21, 7, Fig. 34) for changing the display patterns of said logic keyboards in accordance with a shift state of said logic keyboard.

11. An information processing apparatus including an integral display/input device formed by integrally stacking a display unit and a coordinate input unit, characterized by comprising:

means (23) for storing patterns of logic keyboards for inputting data to said information processing apparatus in accordance with information input from said coordinate input unit;

logic keyboard display means (21, 7) for displaying the pattern of said logic keyboard on said display unit; and

key arrangement changing means (21, 7, Fig. 31) for changing a key arrangement of the pattern of the displayed logic keyboard.

12. An information processing apparatus, including an integral display/input device (2) formed by integrally stacking a display unit and a coordinate input unit, for causing said display unit to display, as needed, an input area indicating a specific area on said coordinate input unit, said input area indicating specific processing contents and designating execution of the specific processing contents, characterized in that there are provided:

detecting means (21, Fig. 35) for detecting that the input area is kept designated for a predetermined period of time; and

means (21, Fig. 35) for performing specific processing corresponding to the designated input area every time said detecting means detects that the input area is kept designated for the predetermined period of time.

PEN

MENU ICON

F I G. 1

INPUT CHARACTER

PEN

ABC−

SOFTWARE
KEYBOARD

F I G. 2

RECOGNITION
RESULT

ABC−

PEN

A B C

WINDOW FOR
INPUTTING
HAND−WRITTEN
CHARACTER

F I G. 3

WINDOW
FOR
INPUTTING
IMAGE

HAND−
WRITTEN
IMAGE

F I G. 4

| Esc | F1 | F2 | F3 | F4 | F5 | F6 | F7 | F8 | F9 | F10 | | | | |
|---|---|---|---|---|---|---|---|---|---|---|---|---|---|---|
| 1 ! ぬ | 2 ″ ふ | 3 # ぁ あ | 4 $ ぅ う | 5 % ぇ え | 6 ∧ ぉ お | 7 & ゃ や | 8 ✳ ゅ ゆ | 9 ( ょ よ | 0 ) を わ | — ー ほ | = + ∧ | ← | | Home |
| ← → | Q た | W て | E い | R す | T か | Y ん | U な | I に | O ら | P せ | { [ ゛ | } ] 。 | | P9 Up |
| Ctrl | A ち | S と | D し | F は | G き | H く | J ま | K の | L り | : ; れ | " ' け | ⏋ ¥ む | ⏎ | P9 Dn |
| Shift | Z っ | X さ | C そ | V ひ | B こ | N み | M も | , ね | . る | ? / め | Shift₃ | ↑ | | End |
| Alt | Caps | ¥ | 漢 | カナ | | | | — | Ins | Del | ← | ↓ | → | |

F I G. 5

ABCD

SOFTWARE
KEYBOARD

CURSOR POSITION

INPUT CHARACTER

F I G. 6

F I G. 7

COORDINATE
DETECTION
EFFECTIVE AREA

6

7 LCD

CANCEL

MENU ICON

EFFECTIVE
DISPLAY AREA

# F I G. 8

6

FRAME

7 LCD

# F I G. 9

F I G. 10

F I G. 11

EP 0 464 712 A2

NAME [_____]  AGE [____]  SEX [MALE|FEMALE]

ZIP CODE [____] - [____]

ADDRESS [_____]

TELEPHONE NO. [_____]

REMARKS [_____]

| ャ | ア | ン | ワ | ラ | ヤ | マ | ハ | ナ | タ | サ | カ | ア |
|---|---|---|---|---|---|---|---|---|---|---|---|---|
|   | イ | ゛ |   | リ |   | ミ | ヒ | ニ | チ | シ | キ | イ |
| ュ | ウ | ゜ |   | ル | ユ | ム | フ | ヌ | ツ | ス | ク | ウ |
|   | エ | ー |   | レ |   | メ | ヘ | ネ | テ | セ | ケ | エ |
| ョ | オ |   | ヲ | ロ | ヨ | モ | ホ | ノ | ト | ソ | コ | オ |

F I G. 12

# F I G. 13

EP 0 464 712 A2

| | |
|---|---|
| FIELD TYPE | ⎫ |
| LINE | |
| COLUMN | |
| DATA LENGTH | ⎬ FIELD 1 |
| DATA | |
| FIELD TYPE | ⎫ |
| LINE | |
| COLUMN | |
| DATA LENGTH | ⎬ FIELD 2 |
| DATA | |
| ¦ | |
| ooh (END) | |

F I G. 14

ROM

23

| FIELD TYPE |
| LINE |
| COLUMN |
| DATA LENGTH |
| DATA |

SCREEN FORMAT DATA

SOFTWARE KEYBOARD A

SOFTWARE KEYBOARD B

SOFTWARE KEYBOARD C

DEVELOPMENT

14

VRAM

5

LCD

F I G. 15

NAME [_____] AGE [__] SEX [MALE|FEMALE]

ZIP CODE [____] - [____]

ADDRESS [_____]

TELEPHONE NO. [_____]

REMARKS [_____]

| 7 | 8 | 9 | ÷ |
| 4 | 5 | 6 | X |
| 1 | 2 | 3 | − |
| 0 | · | = | + |

F I G. 16

EP 0 464 712 A2

NAME | | AGE | | SEX | MALE | FEMALE

ZIP CODE | ____ — ____

ADDRESS |

TELEPHONE NO. |

REMARKS |

| ! 1 | 2 | # 3 | $ 4 | % 5 | ^ 6 | & 7 | * 8 | ( 9 | ) 0 | _ — | + = |
|---|---|---|---|---|---|---|---|---|---|---|---|
| Q | W | E | R | T | Y | U | I | O | P | [ { | ] } |
| A | S | D | F | G | H | J | K | L | ; : | , " | ¥ |
| Shift | Z | X | C | V | B | N | M | . < | . > | / ? | |
| | | | カ + | Space | | | | | | | |

F I G. 17

EP 0 464 712 A2

F I G. 18

EP 0 464 712 A2

F I G. 19A

START

B

READ PEN TIP SWITCH STATUS AND COORDINATE DATA — S21

IS SOFTWARE KEYBOARD ALREADY DISPLAYED ? — S22

YES

NO

IS PEN TIP SWITCH TURNED ON OUTSIDE COORDINATE EFFECTIVE AREA ? — S27

NO → A

IS PEN TIP SWITCH TURNED ON OUTSIDE COORDINATE DETECTION EFFECTIVE AREA ? — S23

YES

NO

YES

MOVE CURSOR OR RECOGNIZE CHARACTER IN ACCORDANCE WITH READ COORDINATE DATA — S24

ERASE SOFTWARE KEYBOARD — S28

DETERMINE TYPE OF KEYBOARD IN ACCORDANCE WITH TYPE OF INPUT FIELD WHERE CURSOR POSITIONS — S25

DISPLAY SOFTWARE KEYBOARD IN POSITION WITH WHICH INPUT FIELD WHERE CURSOR POSITION IS NOT OVERLAPPED AND REMAINING INPUT FIELDS ARE OVERLAPPED TO MINIMUM — S26

26

EP 0 464 712 A2

A

**S29**
IS SOFTWARE KEYBOARD IN MOVE MODE ? —NO→

↓YES

**S32**
IS STATUS OF PEN TIP SWITCH ON ? —NO→

↓YES

**S30**
IS DESIGNATED COORDINATE POSITION WITHIN MOVE MARK AND PEN TIP SWITCH ON? —NO→

↓YES

**S31**
SOFTWARE KEYBOARD IS SET IN MOVE MODE

**S35**
INPUT KEYDATA FROM SOFTWARE KEYBOARD OR MOVE CURSOR IN ACCORDANCE WITH READ COORDINATE DATA

**S36**
IS CURSOR MOVED TO OTHER INPUT FIELD ? —NO→

↓YES

**S37**
IS INPUT FIELD WHERE CURSOR POSITIONS OVERLAPPED WITH SOFTWARE KEYBOARD ? —NO→

↓YES

**S38**
MOVE SOFTWARE KEYBOARD IN POSITION WITH WHICH INPUT FIELD WHERE CURSOR POSITIONS IS NOT OVERLAPPED AND REMAINING INPUT FIELDS ARE OVERLAPPED TO MINIMUM

**S34**
RELEASE MOVE MODE OF SOFTWARE KEYBOARD

**S33**
MOVE DISPLAY POSITION OF SOFTWARE KEYBOARD SUCH THAT CURRENTLY DESIGNATED COORDINATE POSITION IS CENTER OF MOVE MARK

B

F I G. 19B

F I G. 20

EP 0 464 712 A2

| | KANA | FIG. 23 | FIG. 25 |
|---|---|---|---|
| JAPANESE | KANA SYMBOL | FIG. 24 | FIG. 26 |
| ENGLISH | ALPHA SYMBOL | FIG. 27 | FIG. 28 |
| | ALPHANUMERIC | FIG. 29 | FIG. 30 |

F I G. 21

F I G. 22

EP 0 464 712 A2

EP 0 464 712 A2

KANA ( JIS ARRANGEMENT )

| ESC | ヌ | フ | ア | ウ | エ | オ | ヤ | ユ | ヨ | ワ | ホ | ヘ | ー | BS | |
|---|---|---|---|---|---|---|---|---|---|---|---|---|---|---|---|
| ←→ | タ | テ | イ | ス | カ | ン | ナ | ニ | ラ | セ | ゛ | ゜ | ENTER | | INS |
| ALPHA SYMBOL | チ | シ | ト | ハ | キ | ク | マ | ノ | リ | レ | ケ | ム | | | DEL |
| ALPHA-NUMERIC | ッ | サ | ソ | ヒ | コ | ミ | モ | ネ | ル | メ | ロ | ヲ | | ↑ | ↓ |
| KANA | KANA SYMBOL | SPACE | | | | | | | | | | | | ← | → |

F I G. 23

KANA SYMBOL ( JIS ARRANGEMENT )

| ESC | | | ァ | ゥ | ェ | ォ | ャ | ュ | ョ | ヲ | 〃 | 々 | --- | BS | |
|---|---|---|---|---|---|---|---|---|---|---|---|---|---|---|---|
| ←→ | | | ィ | | | | | | | 茸 | 『 | 「 | ENTER | | INS |
| ALPHA SYMBOL | | | | | | | | | | エ | 』 | 」 | | | DEL |
| ALPHA-NUMERIC | ッ | | | | | | | | 、 | ， | ・ | 〒 | | ↑ | ↓ |
| KANA | KANA SYMBOL | SPACE | | | | | | | | | | | | ← | → |

F I G. 24

## KANA ( JAPANESE SYLLABARY ARRANGEMENT )

| ESC | ア | イ | ウ | エ | オ | ナ | ニ | ヌ | ネ | ノ | ヤ | ユ | ヨ | BS | |
|---|---|---|---|---|---|---|---|---|---|---|---|---|---|---|---|
| ⟵⟶ | カ | キ | ク | ケ | コ | ハ | ヒ | フ | ヘ | ホ | ワ | ン | ENTER | | INS |
| ALPHA SYMBOL | サ | シ | ス | セ | ソ | マ | ミ | ム | メ | モ | ヲ | ー | | | DEL |
| ALPHA−NUMERIC | タ | チ | ツ | テ | ト | ラ | リ | ル | レ | ロ | ゛ | ゜ | | ↑ | ↓ |
| KANA | KANA SYMBOL | SPACE | | | | | | | | | | | | ← | → |

# F I G. 25

## KANA SYMBOL ( JAPANESE SYLLABARY ARRANGEMENT )

| ESC | ァ | ィ | ゥ | ェ | ォ | | 〃 | ヽ | … | | ャ | ュ | ョ | BS | |
|---|---|---|---|---|---|---|---|---|---|---|---|---|---|---|---|
| ⟵⟶ | | | | | | ヰ | 『 | 「 | | | | | ENTER | | INS |
| ALPHA SYMBOL | | | | | | ヱ | 』 | 」 | | | ヲ | ー | | | DEL |
| ALPHA−NUMERIC | | | ッ | | | | 、 | 。 | ・ | | | | | ↑ | ↓ |
| KANA | KANA SYMBOL | SPACE | | | | | | | | | | | | ← | → |

# F I G. 26

EP 0 464 712 A2

## ALPHA SYMBOL ( QWERTY ARRANGEMENT )

| ESC | ! | " | # | $ | % | & | ' | ( | ) | " | = | ≦ | ≧ | BS | |
|---|---|---|---|---|---|---|---|---|---|---|---|---|---|---|---|
| ← → | Q | W | E | R | T | Y | U | I | O | P | · | { | ENTER | INS |
| ALPHA SYMBOL | A | S | D | F | G | H | J | K | L | + | * | } | | DEL |
| ALPHA-NUMERIC | Z | X | C | V | B | N | M | < | > | ? | ÷ | . | ↑ | ↓ |
| KANA | KANA SYMBOL | SPACE | | | | | | | | | | | ← | → |

F I G. 27

## ALPHA SYMBOL ( ALPHABET ARRANGEMENT )

| ESC | ! | " | # | $ | % | & | ' | ( | ) | " | = | ≦ | ≧ | BS | |
|---|---|---|---|---|---|---|---|---|---|---|---|---|---|---|---|
| ← → | A | B | C | D | E | F | G | H | I | J | K | L | ENTER | INS |
| ALPHA SYMBOL | M | N | O | P | Q | R | S | T | U | V | W | X | | DEL |
| ALPHA-NUMERIC | Y | Z | · | ÷ | + | * | { | } | < | > | ? | . | ↑ | ↓ |
| KANA | KANA SYMBOL | SPACE | | | | | | | | | | | ← | → |

F I G. 28

EP 0 464 712 A2

ALPHANUMERIC  ( QWERTY ARRANGEMENT )

| ESC | 1 | 2 | 3 | 4 | 5 | 6 | 7 | 8 | 9 | 0 | − | ± | ¥ | BS | |
|---|---|---|---|---|---|---|---|---|---|---|---|---|---|---|---|
| ← → | q | w | e | r | t | y | u | i | o | p | @ | [ | | ENTER ←⏎ | INS |
| ALPHA SYMBOL | a | s | d | f | g | h | j | k | l | ; | : | ] | | | DEL |
| ALPHA- NUMERIC | z | x | c | v | b | n | m | , | . | | ~ | | | ↑ | ↓ |
| KANA | KANA SYMBOL | SPACE | | | | | | | | | | | | ← | → |

F I G.  29

ALPHANUMERIC ( ALPHABET ARRANGEMENT )

| ESC | 1 | 2 | 3 | 4 | 5 | 6 | 7 | 8 | 9 | 0 | − | ± | ¥ | BS | |
|---|---|---|---|---|---|---|---|---|---|---|---|---|---|---|---|
| ← → | a | b | c | d | e | f | g | h | i | j | k | l | | ENTER ←⏎ | INS |
| ALPHA SYMBOL | m | n | o | p | q | r | s | t | u | v | w | x | | | DEL |
| ALPHA- NUMERIC | y | z | @ | ~ | ; | : | [ | ] | , | . | | | | ↑ | ↓ |
| KANA | KANA SYMBOL | SPACE | | | | | | | | | | | | ← | → |

F I G.  30

EP 0 464 712 A2

EP 0 464 712 A2

KEY ARRANGEMENT
SELECT PROCESS

A1
IS
KANA
JIS ARRANGEMENT
ON
?

YES    NO

A2
IS
ENGLISH
JIS ARRANGEMENT
ON
?

YES    NO

A5
IS
ENGLISH
JIS ARRANGEMENT
ON
?

NO    YES

A3
SET KANA IN JIS ARRANGEMENT AND ENGLISH LETTER IN ALPHABETIC ARRANGEMENT

A4
SET KANA IN JIS ARRANGEMENT AND ENGLISH LETTER IN ALPHABETIC ARRANGEMENT

A6
SET KANA IN JAPANESE SYLLABARY ARRANGEMENT AND ENGLISH LETTER IN JIS ARRANGEMENT

A7
SET KANA IN JAPANESE SYLLABARY ARRANGEMENT AND ENGLISH LETTER IN ALPHABETIC ARRANGEMENT

EXIT

F I G. 31

## F I G. 32

| KANA | JIS ARRANGEMENT | JAPANESE SYLLABARY ARRANGEMENT |
|---|---|---|
| ALPHABET | JIS ARRANGEMENT | ABC ARRANGEMENT |

## F I G. 33

| KANA | JIS ARRANGEMENT | JAPANESE SYLLABARY ARRANGEMENT |
|---|---|---|
| ALPHABET | JIS ARRANGEMENT | ABC ARRANGEMENT |

EP 0 464 712 A2

KEY PATTERN
DETERMINATION

F

B1
IS
ALPHABET
PICKED
?

YES

B6
IS
JIS ARRANGEMENT
DESIGNATED
?

YES

NO

NO

B7
DISPLAY SOFTWARE KEYBOARD
FOR ALPHABET INPUT IN
QWERTY ARRANGEMENT

B8
DISPLAY SOFTWARE KEYBOARD
FOR ALPHABET INPUT IN
ALPHABET ARRANGEMENT

B2
IS
ALPHA NUMERIC
PICKED
?

B9
IS
JIS ARRANGEMENT
DESIGNATED
?

YES

NO

C

B10
DISPLAY SOFTWARE KEYBOARD
FOR ALPHANUMERIC INPUT
IN QWERTY ARRANGEMENT

B11
DISPLAY SOFTWARE KEYBOARD
FOR ALPHANUMERIC INPUT
IN ALPHABET ARRANGEMENT

D

F I G. 34A

C

B3

IS
KANA PICKED
?

YES

NO

E

B12

IS
JIS ARRANGEMENT
DESIGNATED
?

NO

YES

B18

DISPLAY SOFTWARE KEYBOARD
FOR KANA INPUT IN
JIS ARRANGEMENT

DISPLAY SOFTWARE KEYBOARD
FOR KANA INPUT IN
JAPANESE SYLLABARY

B15

EXIT

F I G. 34B

EP 0 464 712 A2

F I G. 34C

F I G. 35A

HW INTERRUPT

C1

OBTAIN POSITION COORDINATES DESIGNATED BY STYLUS PEN AND STATUS OF PEN TIP SWITCH

C2 — IN-REPEAT FLAG = 1 ? → YES → H

NO

C3 — IS PEN TIP POSITIONED ON KEYBOARD PATTERN ? → NO

YES

C4 — IS PEN TIP SWITCH TURNED ON ? → NO

YES

C5

GENERATE FROM PEN TIP POSITION COORDINATES KEY CODE CORRESPONDING TO KEY TOP ON WHICH PEN TIP IS POSITIONED

C6 — DETERMINE OBTAINED KEY CODE AS KEY INPUT

C7 — SAVE OBTAINED KEY CODE IN RAM

C8 — SET IN-REPEAT FLAG TO "1"

C9 — SAVE SWITCH STATUS OBTAINED IN STEP C1 IN RAM

I

COMPLETION OF HW INTERRUPT PROCESS

```
                              ┌───┐
                              │ H │
                              └─┬─┘
                                │                    C10
                    ┌───────────┴───────────┐
         NO         ╱          IS            ╲
    ┌───────────────   PEN TIP SWITCH        │
    │               ╲          ON             ╱
    │                └──────────┬────────────┘
    │                           │ YES
    │                           │                    C11
    │                 ┌─────────┴──────────┐
    │      NO        ╱        IS            ╲
    │◄──────────────   PEN TIP POSITIONED ON│
    │               ╲    KEYBOARD PATTERN    ╱
    │                └─────────┬────────────┘
    │                          │ YES
    │                          │                      C12
    │          ┌───────────────┴────────────────┐
    │          │ GENERATE FROM PEN TIP COORDINATES│
    │          │ KEY CODE CORRESPONDING TO KEY TOP│
    │          │ ON WHICH PEN TIP IS POSITIONED   │
    │          └───────────────┬────────────────┘
    │                          │                       C13
    │                ┌─────────┴──────────┐
    │     NO        ╱     IS SAVED         ╲
    │◄─────────────   KEY CODE EQUAL TO KEY │
    │               ╲  CODE OBTAINED IN      ╱
    │               ╲     STEP C12?         ╱
    │                └─────────┬───────────┘
    │                          │ YES            C14
    │                ┌─────────┴──────────┐
    │                │ DECREMENT COUNTER   │
    │                │     BY ONE          │
    │                └─────────┬──────────┘
    │                          │                       C15
    │                ┌─────────┴──────────┐
    │     NO        ╱     COUNTER = 0      ╲
    │◄─────────────  ╲        ?            ╱
    │                └─────────┬──────────┘
    │                          │ YES                   C16
    │                ┌─────────┴──────────┐
    │                │ DETERMINE KEY CODE  │
    │                │   AS KEY INPUT      │
    │                └─────────┬──────────┘
    │                          │
    │                ┌─────────┴──────────┐
    │                │ INITIALIZE COUNTER  │
    │                │  COUNTER ◄── 10     │
    │                └─────────┬──────────┘
    │                          │              C17
C18 │
┌───┴──────────────┐
│ RESET IN-REPEAT  │
│ FLAG             │
│ (SET FLAG TO "O")│
└───┬──────────────┘
    │                          │
    └──────────────────────────┤
                               │
                           ┌───┴───┐
                           │   I   │
                           └───────┘
```

F I G. 35B

40